# DEMANDE DE BREVET EUROPEEN

(11) **EP 0 835 830 A1**
(43) Date de publication de la demande: **15.04.1998**
(21) Numéro de dépôt: 97402406.9
(22) Date de dépôt: 13.10.1997
(51) Int. Cl.: B65G 47/28, B65G 23/30, B65G 13/07

(54) **Procédé et dispositif de transport de produits selon un pas déterminé**

(30) Priorité: 14.10.1996 FR 9612485
(71) Demandeur: "Société Nouvelle Eurocri" Européenne de Création et de Réalisations Industrielles, 77120 Coulommiers (FR)
(72) Inventeur: Lecomte, Jean-Luc, 77120 Mouroux (FR); Le Senechal, Pascal, 77120 Coulommiers (FR); Lassoudry, Daniel, 91830 Le Coudray Montceaux (FR)
(74) Mandataire: Texier, Christian

(57) **Abrégé**

La présente invention concerne un procédé et un dispositif pour transporter longitudinalement des produits en respectant un pas longitudinal déterminé (p).

Entre deux surfaces transporteuses (20, 35, 21) se déplaçant à une vitesse déterminée (V₁) égale au produit d'une cadence déterminée, au moins moyenne (c) d'arrivée des produits par le pas (p), on fait reposer les produits sur une deuxième surface transporteuse (34) se déplaçant à une vitesse (Vᵥ) que l'on fait osciller systématiquement autour de ladite vitesse déterminée (V₁), à une cadence égale à ladite cadence déterminée (c).

On peut ainsi mettre ou maintenir les produits au pas (p) et, lorsqu'on traite simultanément plusieurs files de produits, soit mettre les files en phase, soit établir entre elles un déphasage déterminé.

## Description

La présente invention concerne un procédé pour transporter dans un sens longitudinal déterminé, en respectant un pas longitudinal déterminé p, des produits arrivant au moins en moyenne à une cadence déterminée c, ledit procédé consistant notamment à faire reposer les produits sur des premières surfaces transporteuses se succédant dans ledit sens et se déplaçant dans ledit sens à une vitesse déterminée V₁ égale au produit de ladite cadence c par ledit pas p. Elle concerne également un dispositif pour transporter dans un sens longitudinal déterminé, en respectant un pas longitudinal déterminé p, des produits arrivant au moins en moyenne à une cadence déterminée c, ledit dispositif comportant notamment des premières surfaces transporteuses se succédant dans ledit sens, des moyens pour déplacer les premières surfaces transporteuses dans ledit sens à une vitesse déterminée V₁ égale au produit de ladite cadence c par ledit pas p et des moyens pour déposer les produits au moins en moyenne à la cadence déterminée c sur la première surface transporteuse la plus en amont, en référence audit sens.

On considère ici comme un produit aussi bien un objet individuel, tel qu'un gâteau ou un fromage, dont le transport par le procédé selon l'invention et/ou au moyen du dispositif selon l'invention constitue un préalable au conditionnement individuel, qu'un groupe, organisé ou non, d'objets individuels dont ce transport constitue un préalable au conditionnement collectif, tels que des chocolats destinés à être conditionnés de façon rangée dans une même boîte ou des bonbons destinés à être conditionnés en vrac dans un même sachet, étant entendu que ces exemples ne sont en aucune façon limitatifs des possibilités d'application du procédé et du dispositif selon l'invention. En particulier, ce procédé et ce dispositif peuvent également s'appliquer à des produits non alimentaires tels que des outils, des articles de quincaillerie ou de bimbeloterie, des articles d'hygiène, ou autres, et au transport ordonné de produits, alimentaires ou non, en vue d'un traitement autre qu'un conditionnement.

On sait que de nombreux traitements appliqués automatiquement à des produits en grand nombre, tels que les traitements de conditionnement individuel ou collectif, nécessitent que les produits se présentent sous forme ordonnée avec précision.

En particulier, les produits amenés par exemple aux machines automatiques de conditionnement doivent respecter un pas déterminé avec autant de précision que possible, en référence à un sens déterminé d'avancement vers la machine de conditionnement, et si l'on conditionne simultanément, soit individuellement, soit collectivement, des produits acheminés dans ce sens en plusieurs files, il peut être indispensable que non seulement les produits correspondant à chaque file soient au même pas, mais en outre que les produits des différentes files parviennent en phase, ou déphasés de façon déterminée, au conditionnement.

Lorsqu'il s'agît ainsi de mettre des produits à un pas déterminé, ou encore de s'assurer de ce qu'ils conservent un pas déterminé, et/ou de mettre des files voisines de produits en phase ou en déphasage déterminé, on dispose actuellement de deux techniques.

L'une de ces techniques consiste à faire descendre vers l'une desdites premières surfaces transporteuses des barrières sur lesquelles les produits viennent buter et que l'on relève séquentiellement afin de libérer en une fois tous les produits qui sont venus buter sur une barrière pendant une période de temps déterminée. Cette solution n'est compatible qu'avec des produits durs, que le contact avec les barrières ne risque pas de détériorer. Elle nécessite des mouvements rapides de descente et de montée des barrières, c'est-à-dire exige des moyens mécaniques robustes, et donc coûteux pour assurer ces mouvements, d'une part, et entraîne un bruit de fonctionnement important, d'autre part. Enfin, il est important d'éviter qu'une barrière ne descende sur un produit si bien qu'il est nécessaire, d'une part, de prévoir des moyens électroniques de détection de présence de produit, afin d'éviter un tel accident, et, d'autre part, de multiplier les barrières afin qu'un produit échappant à l'une soit néanmoins arrêté ensuite puis libéré au moment où il occupe une position déterminée par rapport aux autres produits, ce qui complique le dispositif et le rend d'autant plus coûteux qu'il est naturellement nécessaire de prévoir la même robustesse et les mêmes précautions à l'encontre d'une descente sur un produit pour toutes les barrières.

Une autre solution connue consiste à déplacer les produits sur des successions de surfaces transporteuses individuelles dont on règle individuellement la vitesse en fonction d'une lecture des positions relatives des produits au moyen de capteurs appropriés. Cette solution peut s'appliquer à une plus large gamme de produits dans la mesure où elle est compatible avec des produits mous, et un dispositif la mettant en oeuvre est beaucoup plus silencieux qu'un dispositif mettant en oeuvre l'autre solution connue, précédemment commentée. Toutefois, la détection des positions relatives des produits et la commande individuelle des surfaces transporteuses entraînent une grande complexité des équipements mécaniques d'entraînement des surfaces transporteuses et des équipements électroniques de commande si bien qu'il s'agit d'une solution particulièrement coûteuse.

Le but de la présente invention est de remédier à ces inconvénients et, à cet effet, la présente invention propose un procédé du type indiqué en préambule, caractérisé en ce que, entre deux desdites premières surfaces transporteuses, on fait reposer les produits sur une deuxième surface transporteuse que l'on fait se déplacer dans ledit sens à une vitesse Vᵥ que l'on fait osciller systématiquement, autour de ladite vitesse déterminée V₁, à une cadence égale à ladite cadence déterminée c.

Pour la mise en oeuvre de ce procédé, elle propose en outre un dispositif du type indiqué en préambule, caractérisé en ce qu'il comporte, entre deux desdites premières surfaces transporteuses, une deuxième surface transporteuse et en ce que sont prévus des moyens pour déplacer la deuxième surface transporteuse dans ledit sens à une vitesse Vᵥ oscillant systématiquement, autour de ladite vitesse déterminée V₁, à une cadence égale à ladite cadence déterminée c.

Un Homme du métier comprendra que le franchissement successif des transitions entre une deuxième surface et les premières surfaces qui, respectivement, la précède et la suit dans ledit sens peut créer sur un produit tantôt un effet d'arrêt puis de libération comparable à celui d'une barrière, tantôt un effet accélérateur, selon la valeur de la vitesse Vᵥ ou plus précisément de la différence entre cette vitesse et la vitesse V₁ des premières surfaces au moment du franchissement de l'une ou l'autre de ces transitions par le produit. L'expérience a montré que ces effets, obtenus systématiquement, c'est-à-dire sans que l'on soit obligé de tenir compte de la position qu'un produit occupe par rapport aux autres produits à son arrivée à la transition entre les premières et deuxièmes surfaces transporteuses, et par conséquent sans que l'on ait besoin de moyens mécaniques et électroniques complexes et coûteux, permettent de mettre au pas, avec précision, des produits arrivant de façon désordonnée, c'est-à-dire espacés longitudinalement de façon quelconque. En résumé, un procédé et un dispositif selon l'invention permettent d'effectuer une mise au pas, ou le cas échéant de conserver un pas déterminé, en mettant en oeuvre des moyens beaucoup plus simples, beaucoup plus fiables et beaucoup moins coûteux que ceux que l'on mettait antérieurement en oeuvre à cet effet ; en outre, la mise en oeuvre de l'invention est compatible avec tout type de produits, que ces produits soient durs ou mous.

Cependant, notamment en fonction de la vitesse V₁ à laquelle les produits sont acheminés par la première surface transporteuse située le plus en amont en référence audit sens, en particulier si cette vitesse est élevée, et en fonction de la plus ou moins grande adhérence des produits aux surfaces transporteuses, il peut être nécessaire de faire alterner longitudinalement plusieurs deuxièmes surfaces transporteuses avec des premières surfaces transporteuses, auquel cas on prévoit que, de façon courante, la somme des dimensions longitudinales d'une première et d'une deuxième surfaces transporteuses consécutives soit égale au pas p ou à un multiple de celui-ci, et l'on fait osciller en synchronisme la vitesse Vᵥ des deuxièmes surfaces transporteuses, ce qui permet d'utiliser des moyens communs pour déplacer ces dernières, de façon particulièrement simple et économique.

Bien plus, dans la mesure où la vitesse Vᵥ de la ou chaque deuxième surface transporteuse est liée à la vitesse V₁ des premières surfaces transporteuses, on peut prévoir des moyens moteurs communs d'entraînement à titre de moyens pour déplacer les premières surfaces transporteuses et la deuxième surface transporteuse ou, selon le cas, les deuxièmes surfaces transporteuses.

On observera que la mise en oeuvre de l'invention est compatible avec toute conception des surfaces transporteuses, et plus précisément avec le fait que ces surfaces transporteuses soient définies par une bande transporteuse, d'une pièce sur toute la dimension transversale des surfaces transporteuses ou formée d'une juxtaposition transversale de bandes transporteuses se déplaçant à l'unisson, ou par une succession longitudinale de rouleaux transversaux.

Ainsi, un mode de réalisation d'un dispositif selon l'invention se caractérise en ce qu'il comporte une bande transporteuse sans fin, des moyens pour dévier ladite bande sans fin pour y différencier des premières et deuxième(s) zones constituant respectivement les premières et deuxième(s) surfaces transporteuses, en formant une boucle sous la bande à la transition entre la ou chaque deuxième surface transporteuse et les premières surfaces immédiatement précédente et suivante, respectivement, dans ledit sens, des moyens d'entraînement de la bande à ladite vitesse déterminée V₁ de façon courante, notamment dans ses zones constituant les premières surfaces transporteuses, et des moyens pour faire varier systématiquement les longueurs des boucles situées respectivement en amont et en aval de la ou chaque zone constituant une deuxième surface transporteuse, en référence audit sens, de telle sorte que l'une croisse quand l'autre décroît, selon un mode oscillatoire, à une cadence égale à ladite cadence déterminée c, en gardant une valeur sensiblement constante à la somme desdites longueurs, et que la bande se déplace à ladite vitesse Vᵥ dans sa ou chaque zone constituant une deuxième surface transporteuse. Un autre mode de réalisation d'un dispositif selon l'invention se caractérise en ce qu'il comporte une succession longitudinale de rouleaux transversaux, montés rotatifs autour d'un axe transversal respectif, une courroie sans fin en relation d'entraînement avec chaque rouleau, des moyens pour dévier ladite courroie sans fin pour y différencier des zones correspondant à des jeux de rouleaux constituant respectivement les premières et deuxième(s) surfaces transporteuses, en formant une boucle sous les rouleaux à la transition entre les jeux constituant respectivement la ou chaque deuxième surface transporteuse et les premières surfaces transporteuses immédiatement précédente et suivante, respectivement, dans ledit sens, des moyens d'entraînement de la courroie à une vitesse correspondant pour les rouleaux à ladite vitesse déterminée V₁ de façon courante, notamment dans ses zones correspondant aux jeux de rouleaux constituant les premières surfaces transporteuses, et des moyens pour faire varier systématiquement les longueurs des boucles situées respectivement en amont et en aval de la ou chaque zone correspondant à un jeu de rouleaux constituant une deuxième surface transporteuse, en référence audit sens, de telle sorte que l'une croisse quand l'autre décroît, selon un mode oscillatoire, à une cadence égale à ladite cadence déterminée c, en gardant une valeur sensiblement constante à la somme desdites longueurs, et que la courroie se déplace à une vitesse correspondant pour les rouleaux à ladite vitesse Vᵥ dans sa ou chaque zone correspondant à un jeu de rouleaux constituant une deuxième surface transporteuse.

Ces deux modes de réalisation d'un dispositif selon l'invention se prêtent une conception particulièrement simple, fiable et économique des moyens pour faire varier systématiquement les longueurs des boucles situées respectivement de part et d'autre d'une même deuxième surface transporteuse. En effet, selon un mode de réalisation correspondant à une orientation sensiblement transversale des boucles, alors avantageusement simplement suspendues sous les première et deuxième surfaces transporteuses que chacune d'entre elles relie respectivement, ces moyens peuvent comporter un balancier disposé sous la ou chaque deuxième zone, respectivement, et monté oscillant autour d'un axe situé entre les boucles, dans un plan transversal de symétrie de la deuxième zone, ledit balancier comportant des moyens de contournement respectivement par l'une et l'autre boucles, mutuellement symétriques par rapport à cet axe, et des moyens pour faire osciller le balancier systématiquement, à une cadence égale à ladite cadence déterminée c, autour d'une position moyenne dans laquelle les boucles ont la même longueur. Selon un autre mode de réalisation, correspondant à une orientation sensiblement longitudinale, dans des sens mutuellement opposés, des boucles alors convenablement déviées, les moyens pour faire varier systématiquement les longueurs des boucles comportent un curseur disposé sous la ou chaque deuxième zone respectivement, et monté à la translation longitudinale entre les boucles, ledit curseur comportant des moyens de contournement respectivement par l'une et l'autre boucles, et des moyens pour faire aller et venir le curseur systématiquement à une cadence égale à ladite cadence déterminée, autour d'une position moyenne. Le mouvement oscillant du ou de chaque balancier ou curseur peut lui même être obtenu de façon particulièrement simple, fiable et économique puisque l'on peut prévoir, à cet effet, que le ou chaque balancier ou curseur respectivement, soit relié à un moteur d'entraînement par un système bielle-manivelle, ce moteur étant avantageusement commun dans le cas de plusieurs balanciers ou curseurs.

Un Homme du métier comprendra aisément qu'ainsi, un dispositif selon l'invention puisse être à la fois beaucoup plus simple, plus fiable et beaucoup plus économique que l'un ou l'autre des dispositifs de l'Art antérieur précédemment commentés.

Cependant, on pourrait également prévoir de réaliser les premières surfaces transporteuses et, selon le cas, la deuxième surface transporteuse unique ou les deuxièmes surfaces transporteuses sous forme de transporteurs individuels respectifs, par exemple à bande sans fin ou à rouleaux entraînés par courroie, alignés longitudinalement et dont chacun serait mu par ses propres moyens moteurs respectivement à la vitesse déterminée V₁ et à la vitesse Vᵥ oscillant systématiquement autour de la vitesse V₁ ; en comparaison avec la technique antérieure, précédemment commentée, mettant en oeuvre des surfaces transporteuses individuelles réglées individuellement en vitesse, le caractère systématique de la variation oscillatoire de la vitesse Vᵥ, c'est-à-dire l'indépendance de cette variation par rapport à la façon dont les produits arrivent sur chacune des surfaces transporteuses successives, apporterait encore une simplification considérable en permettant de se dispenser de tout dispositif de lecture de la position des produits et de tout dispositif de traitement des informations ainsi recueillies, et de modulation de la vitesse des surfaces transporteuses en fonction de ces informations.

On observera que, quel que soit le mode de réalisation adopté pour les surfaces transporteuses, il est possible de réaliser une gamme complète de dispositifs selon l'invention à partir de modules dont chacun groupe une première et une deuxième surfaces transporteuses, ou au moins les moyens correspondants de formation de boucles dans les bandes constituant les surfaces ou dans les courroies d'entraînement de rouleaux constituant ces surfaces ainsi que les moyens tels que des balanciers ou des curseurs assurant la variation de longueur de ces boucles, et en alignant longitudinalement un nombre de ces modules voulu en fonction de conditions spécifiques d'application, ce qui permet de réaliser une telle gamme de façon particulièrement simple et économique et de rendre les opérations de maintenance simples et rapides si l'on fait, en outre, en sorte que chaque module soit interchangeable indépendamment des autres.

Les applications de la présente invention sont en outre nombreuses puisque non seulement elle permet de mettre au pas des produits arrivant de façon plus ou moins désordonnée en une file ou de transporter sans perdre le pas des produits arrivant en une file et respectant le pas choisi, mais elle permet également et avec les mêmes avantages, en traitant simultanément plusieurs files longitudinales, mutuellement juxtaposées transversalement, de produits, de mettre ces files de produits en phase, c'est-à-dire de faire respecter aux produits des différentes files des alignements transversaux précis, ou encore d'établir un déphasage ou décalage longitudinal déterminé entre les produits d'une file et ceux de la ou chaque file voisine.

Pour mettre non seulement au pas mais également en phase les produits de plusieurs files longitudinales, mutuellement juxtaposées transversalement, de produits, on met en oeuvre le procédé selon l'invention simultanément sur l'ensemble de ces files en utilisant des première et deuxième surfaces transporteuses communes à celles-ci et en déposant les produits sur la première surface transporteuse la plus en amont, en référence audit sens, au moins en moyenne à ladite cadence c, respectivement dans chaque file. Un dispositif selon l'invention utilisable à cet effet se caractérise en ce qu'il comporte des moyens pour déposer des produits en plusieurs files sur la première surface transporteuse la plus en amont, en référence audit sens, au moins en moyenne à ladite cadence c, respectivement dans chaque file.

Pour introduire un déphasage systématique entre les produits de plusieurs files longitudinales, mutuellement juxtaposés transversalement, de produits, on utilise par contre des alternances longitudinales, spécifiques auxdites files et mutuellement juxtaposées transversalement, de premières et deuxièmes surfaces transporteuses, en introduisant entre lesdites alternances un déphasage déterminé dans l'oscillation des vitesses Vᵥ de déplacement des deuxièmes surfaces respectives et en déposant les produits sur chaque première surface la plus en amont, en référence audit sens, au moins en moyenne à ladite cadence c. On utilise à cet effet plusieurs exemplaires d'un dispositif selon l'invention, mutuellement juxtaposés transversalement, et l'on prévoit des moyens pour introduire un déphasage déterminé dans l'oscillation des vitesses Vᵥ de déplacement des deuxièmes surfaces respectives desdits exemplaires et des moyens pour déposer des produits respectivement sur chaque première surface transporteuse, la plus en amont en référence audit sens, au moins en moyenne à ladite cadence c. Naturellement, chacun de ces exemplaires du dispositif selon l'invention peut lui-même traiter plusieurs files longitudinales de produits, dont il assure la mise au pas et en phase tout en introduisant le déphasage voulu par rapport aux produits traités par les autres exemplaires du dispositif.

D'autres caractéristiques et avantages du procédé et du dispositif selon l'invention ressortiront de la description ci-dessous, relative à quelques exemples non limitatifs de mise en oeuvre, ainsi que des dessins annexés qui font partie intégrante de cette description.

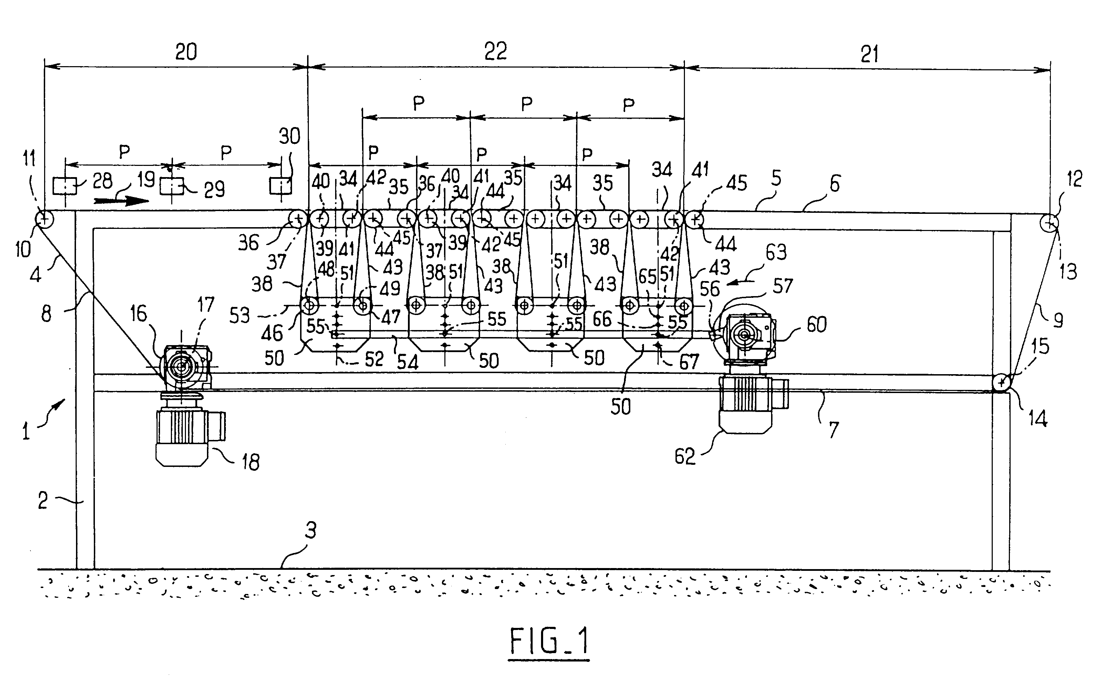

- La figure 1 montre une vue, en élévation latérale, d'un dispositif selon l'invention destiné au traitement simultané de plusieurs files de produits juxtaposés transversalement, par mise au pas des produits de chaque file et mise en phase des différentes files, lequel dispositif comporte à cet effet une bande transporteuse unique comportant quatre deuxièmes zones alternant avec des premières zones auxquelles elles sont reliées par des boucles de longueur variable systématiquement par l'action de balanciers, le nombre de deuxièmes zones et de premières zones intercalées entre elles ne constituant qu'un exemple non limitatif et d'autres nombres pouvant être choisis sans que l'on sorte pour autant du cadre de la présente invention.

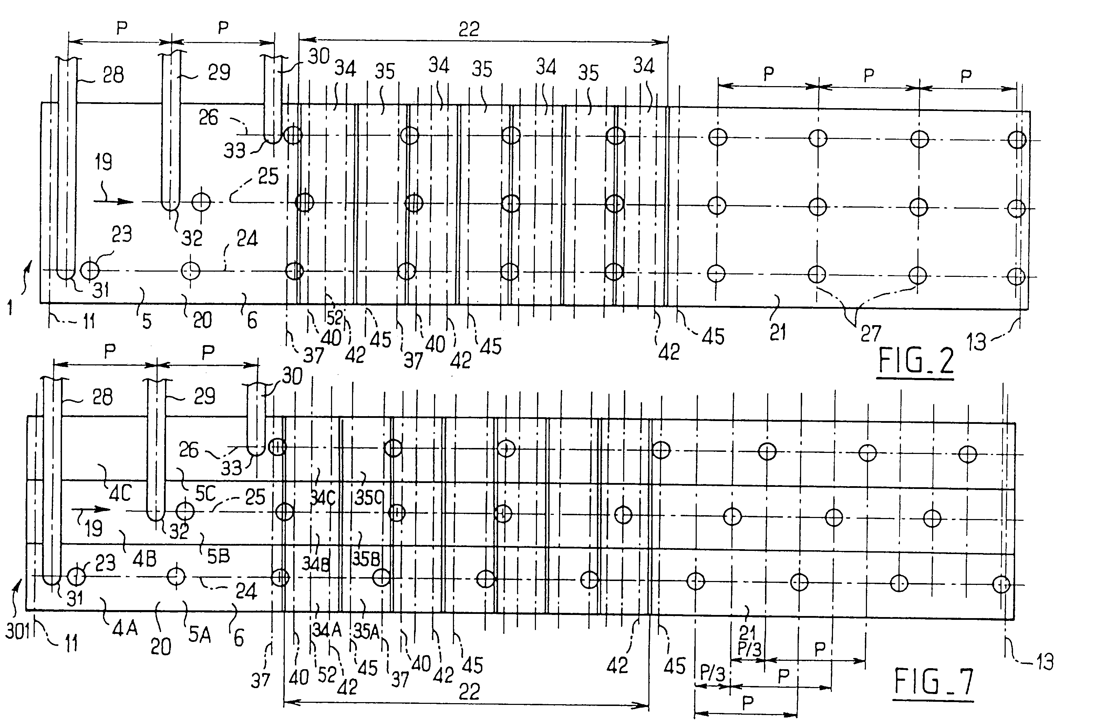

- La figure 2 montre une vue de dessus de ce même dispositif.

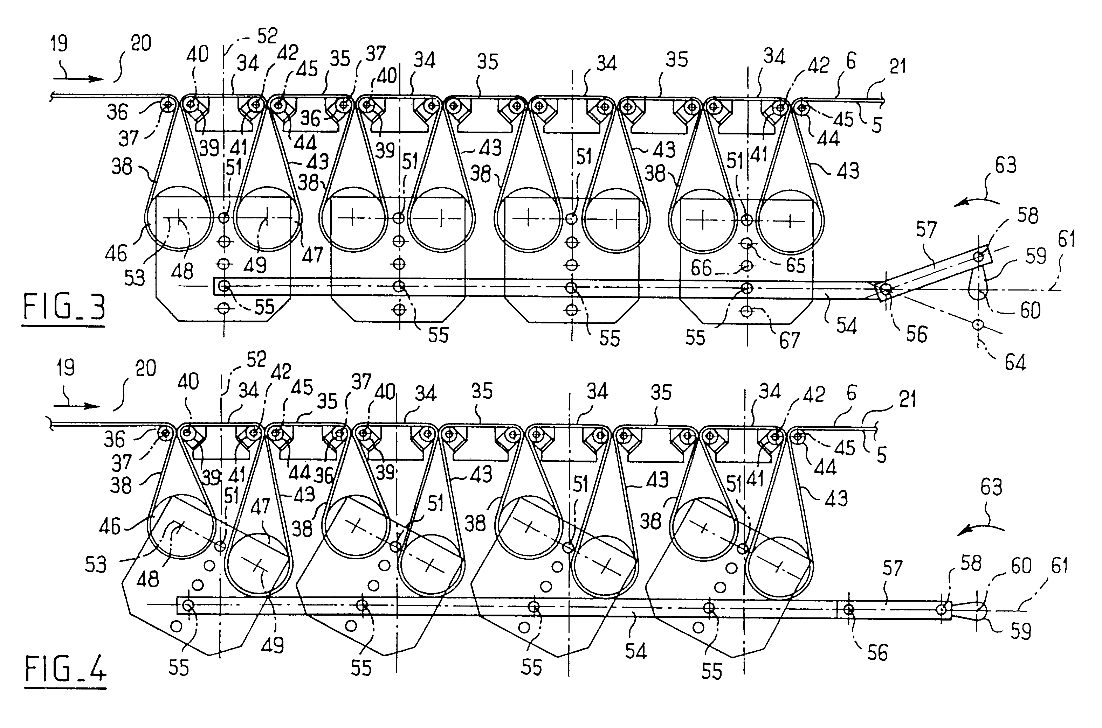

- Les figures 3 à 5 montrent un détail de la figure 1, dans trois positions des balanciers utilisés dans cet exemple pour faire varier la longueur des boucles, à savoir une position correspondant à une égalité des longueurs des boucles raccordant une deuxième surface transporteuse aux premières surfaces transporteuses situées respectivement en amont et en aval en référence audit sens, ce qui correspond également à la position illustrée à la figure 1, une position dans laquelle les boucles amont et aval de chaque deuxième surface transporteuse présentent respectivement leur longueur minimale et leur longueur maximale, et une position dans laquelle ces boucles amont et aval présentent respectivement leur dimension maximale et leur dimension minimale.

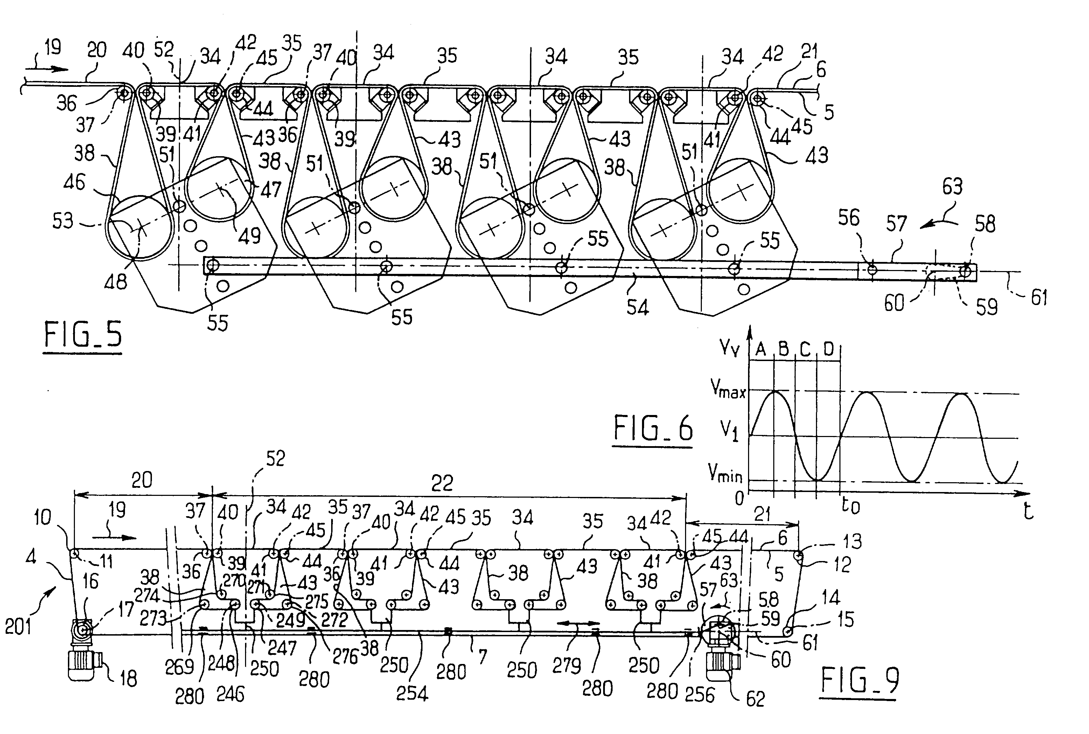

- La figure 6 montre un diagramme de variation systématique de la vitesse Vᵥ des deuxièmes zones en fonction du temps t et de la vitesse V₁ des premières zones, considérée comme constante, étant entendu que l'on peut attribuer à cette vitesse V₁ des valeurs différentes pour un même dispositif selon l'invention.

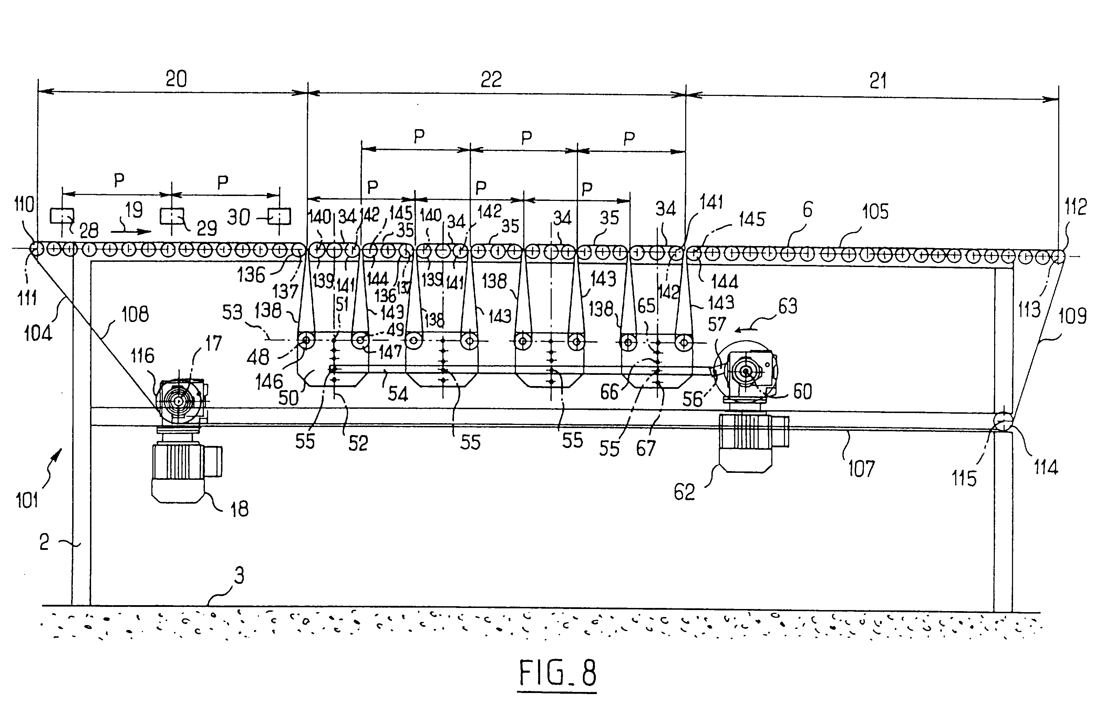

- La figure 7 montre, en une vue de dessus analogue à celle de la figure 2, un dispositif selon l'invention, conçu pour assurer un déphasage entre les produits de plusieurs files longitudinales juxtaposées transversalement, avec mise des produits au pas dans chaque file.
- La figure 8 montre, en une vue analogue à celle de la figure 1, une variante de réalisation du dispositif de mise au pas et en phase selon laquelle la surface transporteuse, au lieu d'être constituée par une bande transporteuse, est constituée par une succession longitudinale de rouleaux transversaux, entraînés par une courroie unique, aussi bien en ce qui concerne les rouleaux correspondant aux premières zones que les rouleaux correspondant aux deuxièmes zones.
- La figure 9 montre, en une vue analogue à celle de la figure 1, une autre variante de réalisation du dispositif de mise au pas et en phase selon laquelle les balanciers oscillants sont remplacés par des curseurs allant et venant longitudinalement.

On a illustré aux figures 1 à 5 un dispositif 1 selon l'invention comportant, sur un bâti rigide 2 fixe par rapport au sol 3, une bande transporteuse sans fin 4 contournant des rouleaux montés à la rotation, sur le bâti 2, autour d'axes horizontaux, mutuellement parallèles, de façon à définir notamment dans la bande 4 un brin supérieur 5 pour l'essentiel plan et horizontal, présentant une face supérieure plane et horizontale constituant une surface transporteuse 6, un brin inférieur 7 plan et horizontal, et deux brins de liaison 8, 9 plans mais obliques, et plus précisément convergeant mutuellement vers le brin inférieur 7 qu'ils raccordent au brin supérieur 5. La transition entre le brin de liaison 8 et le brin supérieur 5 est constituée par le contournement, par la bande transporteuse 4, d'un rouleau 10 monté à la rotation, par rapport au bâti 2, autour d'un axe 11 horizontal et fixe par rapport à ce bâti 2, et le raccordement entre le brin supérieur 5 et le brin de liaison 9 correspond au contournement, par la bande transporteuse 4, d'un rouleau 12 monté à la rotation sur le bâti 2 autour d'un axe horizontal 13 parallèle à l'axe 11 ; de même, le brin de liaison 9 se raccorde au brin inférieur 7 par contournement d'un rouleau 14 monté à la rotation, sur le bâti 2, autour d'un axe 15 parallèle aux axes 11 et 13 et le raccordement du brin de liaison 8 au brin inférieur 7 est défini par le contournement, par la bande 4, d'un rouleau 16 d'axe 17 parallèle aux axes 11, 13, 15. En outre, notamment au niveau du brin supérieur 5, la bande transporteuse 4 est soutenue par d'autres rouleaux montés à la rotation par rapport au bâti 2 autour d'axes horizontaux, parallèles aux axes 11, 13, 15, 17 ; parmi ces autres rouleaux, seuls ont été illustrés ceux qui servent à la mise en oeuvre de l'invention, comme il apparaîtra plus loin. Naturellement, de façon bien connue d'un Homme du métier et même lorsqu'il s'agit des rouleaux servant à la mise en oeuvre de l'invention, chacun de ces rouleaux peut être remplacé par un train de galets de même axe.

Tous les rouleaux ainsi contournés par la bande transporteuse 4 ou servant simplement au support de celle-ci sont libres de tourner autour de leur axe par rapport au bâti 2, à l'exception du rouleau 16 qui peut être entraîné en rotation autour de son axe 17, par rapport au bâti 2, par un moteur commandé 18 qui permet, lorsque le dispositif 1 est en service, de faire circuler la bande 4 autour des rouleaux 10, 12, 14, 16 dans un sens déterminé et à une vitesse courante V₁, de préférence réglable mais généralement fixe pendant le fonctionnement du dispositif 1, notamment de telle sorte que la surface transporteuse 6 définie par le brin supérieur 5 se déplace de façon courante à cette vitesse V₁, dans un sens déterminé 19 allant du rouleau 10 vers le rouleau 12 et constituant un sens longitudinal de référence pour les notions de longitudinalité, de transversalité, d'amont et d'aval, d'avant et d'arrière ainsi que pour toutes notions dérivées qui apparaîtront par la suite.

Plus précisément, la surface transporteuse 6 se déplace dans le sens 19, à la vitesse V₁, dans une zone d'extrémité amont 20 jouxtant le rouleau 10 et constituant une zone de dépôt, sur la surface transporteuse 6, de produits à ordonner au moyen du dispositif selon l'invention 1, et dans une zone d'extrémité aval 21 jouxtant le rouleau 12 et constituant une zone de reprise de produits ordonnés grâce au dispositif selon l'invention 1, la mise en oeuvre du procédé selon l'invention s'effectuant dans une zone 22 longitudinalement intermédiaire entre les zones amont 20 et aval 21, par variation localisée de la vitesse de la surface transporteuse 6 dans des conditions qui seront décrites ultérieurement.

On observera que l'on ne sortirait pas du cadre de la présente invention en donnant une légère obliquité à la surface transporteuse 6 qui pourrait être ascendante ou descendante dans le sens 19 en formant quelques degrés d'angle avec l'horizontale.

Le dispositif selon l'invention 1 est illustré ici dans une application à l'ordonnancement de produits 23, tels que des gâteaux, déposés en trois files longitudinales 24, 25, 26 sur la zone amont 20 de la surface transporteuse 6, l'ordonnancement de ces produits 23 consistant à établir entre deux produits longitudinalement consécutifs, dans chaque file, un pas déterminé p et à mettre en phase les produits des différentes files, c'est-à-dire à les aligner transversalement d'une file à l'autre de telle sorte que dans la zone 21 de la surface transporteuse 6, les produits 23 des trois files 24, 25, 26 se présentent en rangées transversales 27 mutuellement espacées longitudinalement du pas p.

Ainsi, par exemple, les produits 23 sont déposés à une cadence correspondant au moins en moyenne à une cadence déterminée c, respectivement sur chaque file 24, 25, 26, par un dispositif respectif d'alimentation 28, 29, 30 les acheminant vers le dispositif selon l'invention 1 depuis une machine de fabrication, de façon non détaillée mais connue d'un Homme du métier, et les trois dispositifs d'alimentation 28, 29, 30 présentent au-dessus de la zone antérieure 20 de la surface transporteuse 6, suivant la file respective 24, 25, 26, une extrémité respective 31, 32, 33 par laquelle les produits amenés successivement tombent successivement sur la zone 20 de la surface transporteuse 6, les extrémités 31, 32, 33 étant mutuellement décalées du pas p pour faire en sorte que, dans des conditions idéales de respect rigoureux de la cadence déterminée c, de simultanéité de dépôt d'un produit 23 sur chacune des files 24, 25, 26 et de maintien de cette simultanéité au fur et à mesure des dépôts successifs, les produits 23 se trouvent dans la configuration ordonnée que l'on désire obtenir, c'est-à-dire la configuration en rangées 27 respectant entre elles le pas p.

Dans cet exemple, le dispositif selon l'invention 1 est destiné à pallier les conséquences du fait que la cadence c ne puisse être respectée qu'en moyenne au niveau de chaque dispositif d'alimentation 28, 29, 30, que les dépôts de produits 23 au niveau des extrémités 31, 32, 33 de ces dispositifs d'alimentation ne puissent être véritablement simultanés et que, par conséquent, les produits qui quittent la zone amont 20 de la surface transporteuse 6 ne puissent respecter rigoureusement le pas p dans chaque file 24, 25, 26 et ne puissent être rigoureusement alignés transversalement d'une file à l'autre. En effet, la cadence de production des machines d'où proviennent les dispositifs d'alimentation 28, 29, 30 ne peut elle-même être respectée qu'en moyenne et/ou le transfert des produits 23 par les différents dispositifs d'alimentation 28, 29, 30 peut présenter un certain degré d'irrégularité entraînant des différences entre la cadence effective de dépôt des produits 23 dans les différentes files 24, 25, 26 sur la zone amont 20 de la surface transporteuse 6, comme il est bien connu d'un Homme du métier.

Pour pallier ce défaut d'ordonnancement entre les produits 23 lors de leur dépôt sur la zone amont 20 de la surface transporteuse 6, la présente invention prévoit dans la zone intermédiaire 22 des dispositions dont un exemple non limitatif de réalisation va être décrit à présent.

Dans cette zone intermédiaire 22, entre les zones amont 20 et aval 21, se déplaçant à la vitesse V₁ dans le sens 19, de la surface transporteuse 6 est intercalée au moins une zone 34 de celle-ci qui est plane, horizontale, coplanaire avec les zones amont 20 et 21 mais se déplace longitudinalement à une vitesse Vᵥ qui, au lieu d'être constante et égale à V₁, oscille de façon systématique, par exemple sinusoïdalement, autour de la vitesse V₁, de façon continue tant que les zones antérieure 20 et postérieure 21 se déplacent dans le sens 19 à cette vitesse V₁.

La figure 6 montre un exemple de cette variation de la vitesse Vᵥ autour d'une valeur moyenne coïncidant avec la valeur V₁, entre une valeur maximale Vₘₐₓ supérieure à V₁ et une valeur minimale Vₘᵢₙ inférieure à V₁ et pouvant être de même signe que V₁ comme il est illustré, ce qui signifie que la zone 34 se déplace en permanence dans le sens 19, ou nulle, ce qui signifie que la zone 34 s'immobilise périodiquement par rapport au bâti 2, mais se déplace le reste du temps dans le sens 19, ou être négative, auquel cas la zone 34 se déplace alternativement dans le sens 19 et en sens opposé en s'arrêtant à chaque transition entre un déplacement dans un sens et un déplacement dans l'autre.

Cette oscillation systématique de la vitesse Vᵥ de la zone 34 autour de la vitesse V₁ des zones 20 et 21 s'effectue à la cadence déterminée c qui constitue la cadence moyenne de dépôt des produits 23 dans chaque file 24, 25, 26, et la vitesse V₁ est elle-même égale au produit de cette cadence déterminée c par le pas déterminé p constituant à la fois le pas moyen selon lequel les produits sont déposés dans chaque file et le pas que l'on désire établir entre des rangées 27 successives de produits, c'est-à-dire également entre les produits dans chaque file.

Le choix de l'amplitude de l'oscillation, c'est-à-dire le choix des vitesses Vₘₐₓ et Vₘᵢₙ par rapport à la vitesse V₁, est quant à lui avantageusement effectué de façon empirique, et peut varier en fonction d'une combinaison complexe de paramètres parmi lesquels entrent en compte la vitesse V₁ et l'adhérence plus ou moins grande des produits 23 à la surface transporteuse 6, selon la nature de ces produits, leur poids, la nature de la surface transporteuse 6 et en particulier selon les coefficients de frottement.

La zone 34 peut être unique mais, de préférence, plusieurs de ces zones 34 se succèdent longitudinalement dans la zone intermédiaire 22, en alternant avec des zones 35 planes, horizontales, également coplanaires avec les zones amont et aval 20 et 21 de la surface transporteuse 6 et se déplaçant dans le sens 19 à la même vitesse V₁ que ces zones amont et aval 20 et 21. Ainsi, dans l'exemple illustré, on a prévu quatre zones 34 identiques, raccordées deux à deux par une zone 35, à savoir au total par trois zones 35, mais on ne sortirait pas du cadre de la présente invention en effectuant d'autres choix dès lors que, comme il est illustré, les dimensions longitudinales cumulées d'une zone 34 et d'une zone 35 directement consécutives longitudinalement seraient égales au pas p ou, le cas échéant, à un multiple entier de ce pas p. Naturellement, cette condition qui s'applique de façon courante à une zone 34 se déplaçant à la vitesse variable Vᵥ et une zone 35 se déplaçant à la vitesse fixe V₁ ne concerne pas les zones amont 20 et 21 qui, bien que jouxtant directement une zone 34 respective à vitesse variable Vᵥ, peuvent présenter toute dimension longitudinale voulue, par exemple nécessaire à la disposition des dispositifs d'alimentation 28, 29, 30 en ce qui concerne la zone amont 20 et à la prévision, dans la zone 21, successivement de moyens de vérification de l'ordonnancement des produits 23 et de moyens de reprise de ceux-ci, par exemple sous forme de moyens de reprise simultanée de l'ensemble des produits 23 constituant une rangée 27, ou d'un groupe déterminé de rangées 27 se succédant longitudinalement, d'une façon bien connue d'un Homme du métier et non illustrée.

Pour constituer l'alternance des zones 34 et 35, on peut avoir recours à plusieurs bandes transporteuses distinctes de la bande 4 et entraînées par des moyens propres, à des vitesses respectant les indications précédemment données, mais on préfère le mode de réalisation illustré, selon lequel la bande transporteuse 4 constitue à elle-seule non seulement les zones amont et aval 20, 21 de la surface transporteuse 6, mais également chacune des zones 34 et 35.

A cet effet, dans une zone d'extrémité aval de la zone amont 20, jouxtant directement la zone intermédiaire 22, le brin supérieur 5 de la bande transporteuse 4 est rabattu vers le bas, c'est-à-dire sous la surface transporteuse 6, par contournement, vers l'aval, d'un rouleau 36 monté à la rotation libre, par rapport au bâti 2, autour d'un axe horizontal 37 parallèle aux axes 11 et 13, et forme sous la surface transporteuse 6 une boucle 38 suspendue entre le rouleau 36 et un rouleau 39 immédiatement consécutif au rouleau 36 dans le sens 19 et monté à la rotation libre par rapport au bâti 2 autour d'un axe 40 horizontal, parallèle aux axes 11 et 13. Le brin supérieur 5 de la bande transporteuse 4 contourne ce rouleau 39 par l'amont et par le dessus, pour définir une zone d'extrémité amont de la zone 34, dans laquelle le brin supérieur s'étend longitudinalement, dans le sens 19, à partir du rouleau 39.

Dans une zone d'extrémité aval de cette zone 34, le brin supérieur 5 de la bande transporteuse 4 est à nouveau rabattu vers le bas par contournement d'un rouleau 41 monté à la rotation libre, par rapport au bâti 2, autour d'un axe 42 parallèle aux axes 11 et 13. Le brin supérieur 5 de la bande transporteuse 4 contourne ce rouleau 41 par l'aval pour former sous la surface transporteuse 6 une boucle 43 en tout point similaire à la boucle 38 et suspendue entre le rouleau 41 et un rouleau 44 qui est monté à la rotation libre sur le bâti 2 autour d'un axe 45 horizontal, parallèle aux axes 11 et 13 et que le brin supérieur 5 de la bande 4 contourne par l'amont et par le haut pour constituer une zone d'extrémité amont de la zone 35, dans laquelle le brin supérieur 5 s'étend longitudinalement, dans le sens 19, à partir du rouleau 44.

Dans une zone d'extrémité aval de cette zone 35, le brin supérieur 5 de la bande transporteuse 4 est à nouveau rabattu vers le bas par contournement d'un rouleau d'axe horizontal, parallèle aux axes 11 et 13, dans des conditions tout à fait analogues à celles du contournement du rouleau 36, si bien que l'on a attribué à ce rouleau et à son axe de rotation libre par rapport au bâti 2 les références 36 et 37, respectivement. Ce rabattement forme dans le brin supérieur 5 de la bande transporteuse 4, en dessous de la surface transporteuse 6, une boucle identique à la boucle 38 précédemment décrite et pour laquelle on a conservé par conséquent la même référence numérique.

Les zones 34 étant mutuellement identiques de même que les zones 35, on a, de façon générale, utilisé les mêmes références numériques respectivement pour les différents constituants des zones 34 et pour les différents constituants des zones 35 si bien qu'à la transition entre chaque zone 35 et la zone 34 immédiatement suivante dans le sens 19, le brin supérieur 5 de la bande 4 forme sous la surface transporteuse 6 une boucle 38 suspendue entre un rouleau 36, d'axe horizontal 37 parallèle aux axes 11 et 13, et matérialisant la zone d'extrémité aval de la zone 35, et un rouleau 39 monté à la rotation libre par rapport au bâti 2 autour d'un axe 40 parallèle aux axes 11 et 13 pour définir la zone d'extrémité amont de la zone 34. Entre une telle zone 34 et une zone 35 immédiatement consécutive dans le sens 19, le brin supérieur 5 de la bande transporteuse 4 fornie sous la surface transporteuse 6 une boucle 43 suspendue entre un rouleau 41, d'axe horizontal 42 parallèle aux axes 11 et 13 afin de constituer une zone d'extrémité aval de la zone 34, et un rouleau 44 d'axe 45 horizontal, parallèle aux axes 11 et 13, définissant la zone d'extrémité amont de la zone 35. Au raccordement de la dernière zone 34, dans le sens 19, avec la zone aval 21, la boucle 43 est formée entre le rouleau 41, d'axe 42, définissant la zone d'extrémité aval de la zone 34, et un rouleau 44, d'axe 45 horizontal, parallèle aux axes 11 et 13, que le brin supérieur 5 contourne par l'amont et le dessus pour constituer la zone d'extrémité amont de la zone aval 21 de la surface transporteuse 6.

Les rouleaux 10, 12, 36, 39, 41, 44 sont avantageusement identiques, et leurs axes 11, 13, 37, 40, 42, 45 disposés dans un même plan non référencé parallèle à la surface transporteuse 6, sous celle-ci, c'est-à-dire horizontal.

Sous chaque zone 34, respectivement, les deux boucles correspondantes 38 et 43 contournent par le dessous un rouleau respectif 46, 47, monté à la rotation libre autour d'un axe respectif 48, 49, horizontal, parallèle aux axes 11 et 13, au-dessus du brin inférieur 7 du tapis 4, sur un balancier respectif 50 lui-même monté au pivotement sur le bâti 2, autour d'un axe horizontal 51 parallèle aux axes 11 et 13 et disposé dans un plan vertical, transversal, moyen 52 de la zone 34 considérée ; les rouleaux 39 et 41 étant identiques, ce plan 52 constitue le plan de symétrie entre leurs axes 40 et 42.

Les axes 48 et 49 sont mutuellement espacés d'une distance sensiblement égale à celle qui sépare les intercales entre le rouleau 39 de la zone 34 considérée et le rouleau 36 immédiatement voisin vers l'amont, d'une part, le rouleau 41 de la zone 34 considérée et le rouleau 44 immédiatement voisin vers l'aval, d'autre part ; ils sont disposés de part et d'autre de l'axe 51, et sont mutuellement symétriques par rapport à celui-ci si bien que, dans une orientation du balancier 50 illustrée aux figures 1 et 3, les deux boucles 38 et 43 sont identiques et en moyenne verticales, étant entendu que les rouleaux 46 et 47 sont identiques ; dans cette orientation du balancier 50, un plan 53 commun aux axes 48, 49, 51 est parallèle à la surface transporteuse 6, c'est-à-dire horizontal.

Cependant, des moyens sont prévus pour faire osciller systématiquement le balancier 50 autour de l'axe 51, par rapport à cette orientation, de telle sorte que, de façon cyclique, la longueur de l'une des boucles 38 et 43 décroisse alors que la longueur de l'autre de ces boucles croît, et inversement, tout en gardant une valeur sensiblement constante à la somme de ces deux longueurs de façon à conserver la vitesse V₁ dans chacune des zones 35.

Les oscillations des différents balanciers 50, correspondant aux différentes zones 34, doivent s'effectuer à la même cadence c et sont synchronisées.

A cet effet, dans l'exemple illustré, tous les balanciers 50 sont raccordés entre eux par une bielle rectiligne 54, articulée sur chacun d'entre eux autour d'un axe 55 parallèle à l'axe 51 et situé sous celui-ci, dans le plan 52 lorsque chaque balancier 50 occupe l'orientation moyenne illustrée aux figures 1 et 3. La distance séparant mutuellement les axes 55 et 51 sur un même balancier 50 est identique pour tous les balanciers 50 dans cet exemple mais elle pourrait être différente, avec remplacement de la bielle 54 d'accouplement de l'ensemble des balanciers 50 par un jeu de bielles d'accouplement des balanciers 50 deux à deux, grâce à des dispositions qui seront détaillées plus loin. La bielle 54 est par ailleurs articulée autour d'un axe 56 parallèle aux axes 55 sur une bielle 57 articulée par ailleurs, autour d'un axe 58 parallèle à l'axe 56, sur une manivelle 59 susceptible d'être entraînée en rotation par rapport au bâti 2, autour d'un axe 60 fixe par rapport à ce bâti 2, parallèle aux axes 56 et 58 et de préférence situé dans un plan horizontal 61 commun aux axes 55 lorsque les balanciers 50 occupent l'orientation illustrée aux figures 1 et 3. Cette rotation de la manivelle 59 peut être provoquée par un moteur commandé 62 qui peut être indépendant du moteur 18 d'entraînement de la bande transporteuse 4, comme il est illustré, ou peut constituer un seul et même moteur avec ce moteur 18 dans la mesure où il existe un lien entre la cadence d'oscillation des balanciers 50, à savoir la cadence déterminée c, et la vitesse V₁ qui est égale au produit de cette cadence déterminée c par le pas déterminé p.

Les figures 3 à 5 illustrent différentes orientations prises par les balanciers 50, qui se déplacent à l'unisson, au fur et à mesure d'une rotation de la manivelle 59 dans un sens 63 déterminé autour de l'axe 60, sous l'action du moteur 62.

La figure 3 correspond, comme la figure 1, à une orientation moyenne de chaque balancier 50 autour de son axe 51, à savoir une orientation dans laquelle le plan 53 est parallèle à la surface transporteuse 6 et perpendiculaire au plan moyen 52 de la zone 34 correspondante, c'est-à-dire une position dans laquelle les axes 48 et 49 sont mutuellement symétriques par rapport à ce plan 52 et les boucles 38 et 43, alors également mutuellement symétriques par rapport à ce plan 52, sont identiques et, en particulier, présentent la même longueur. Cette orientation moyenne des balanciers 50 correspond par exemple à une orientation verticale de la manivelle 59, dont l'axe 58 est alors placé au-dessus de l'axe 60, et dans un même plan vertical 64 que celui-ci. Le sens 63 allant de la droite vers la gauche, au-dessus de l'axe 60, dans l'exemple illustré, une rotation de la manivelle 59 sur un quart de tour autour de l'axe 60 à partir de la position illustrée à la figure 3 amène l'axe 58 dans le même plan 61 que les axes 56 et 60, entre ces derniers, ce qui correspond pour les balanciers 50 à une orientation limite de décalage maximal de l'axe 55 correspondant, vers la gauche, par rapport au plan 52, comme le montre la figure 4. L'axe 55 étant situé en dessous de l'axe 51, le passage de l'orientation illustrée à la figure 3 à l'orientation illustrée à la figure 4 se traduit par un rapprochement, vis-à-vis de la surface transporteuse 6, de l'axe 48 situé du même côté du plan 52 que l'axe 55 et par un éloignement concomitant de l'axe 49, situé de l'autre côté, par rapport à la surface transporteuse 6 ; en d'autres termes, au cours du passage de l'orientation de chaque balancier 50 illustrée aux figures 1 et 3 à l'orientation illustrée à la figure 4, la boucle 38 est raccourcie et, concomitamment, la boucle 43 est allongée jusqu'à atteindre respectivement une longueur minimale et une longueur maximale. Ces variations de longueur des boucles 38 et 43 se combinent à l'entraînement de la bande 4 à la vitesse V₁ pour provoquer une accélération de celle-ci dans la zone 34 correspondante, si bien que le passage de l'orientation moyenne des balanciers 50 illustrée à la figure 3 à l'orientation limite des balanciers 50 illustrée à la figure 4 correspond, si l'on se réfère à la figure 6, à un accroissement de la vitesse Vᵥ de la surface transporteuse 6 dans chacune des zones 34, cette vitesse Vᵥ passant de la valeur V₁ à la valeur Vₘₐₓ au cours de Cette phase A de variation de la vitesse Vᵥ en fonction du temps.

La poursuite de la rotation de la manivelle 59 dans le sens 63 autour de l'axe 60 amène l'axe 58 sous l'axe 60, dans le même plan vertical 64, comme on l'a schématisé à la figure 3, ce qui ramène chaque balancier 50 à sa position moyenne d'égalité entre les longueurs respectives des boucles 38 et 43. En comparaison avec la dimension des boucles 38 et 43 décrites en référence à la figure 4, celle-ci correspond à un allongement de la boucle 38 et à un raccourcissement de la boucle 43, et ces variations de longueur des boucles se combinent au déplacement de la bande 4 à vitesse V₁ pour provoquer, au cours d'une phase correspondante B de variation de la vitesse Vᵥ en fonction du temps, une décroissance de la vitesse Vᵥ qui passe de la valeur Vₘₐₓ à la valeur moyenne V₁.

Le mouvement de la manivelle 59 dans le sens 63 se poursuivant, l'axe 58 parvient dans une position dans laquelle il est coplanaire aux axes 56 et 60 et situé à l'opposé de l'axe 56 par rapport à l'axe 60, ce qui correspond pour les balanciers 50 à une autre orientation limite illustrée à la figure 5. Dans cette orientation, chaque axe 55 est décalé vers la droite par rapport au plan 52 correspondant, c'est-à-dire du même côté de celui-ci que l'axe 49, ce qui correspond à un rapprochement de cet axe 49 vis-à-vis de la surface transporteuses et à un éloignement de l'axe 48 par rapport à celle-ci, c'est-à-dire encore à un raccourcissement, alors maximal, de la boucle 43 et à un allongement, alors maximal, de la boucle 38. Ces variations de longueur des deux boucles se combinent au déplacement de la bande transporteuse à la vitesse V₁ pour provoquer, au cours d'une phase correspondante C de variation de la vitesse Vᵥ en fonction du temps, une nouvelle diminution de la vitesse Vᵥ qui devient ainsi inférieure à la vitesse moyenne V₁ et décroît jusqu'à atteindre la valeur Vₘᵢₙ, en pratique dans la position de la manivelle 59 et des balanciers 50 illustrée à la figure 6.

Ensuite, la poursuite de la rotation de la manivelle 59 dans le sens 63 ramène progressivement les balanciers 50 dans l'orientation moyenne illustrée à la figure 3, c'est-à-dire dans une orientation d'égalité des longueurs respectives des boucles 38 et 43, ce qui se traduit par un raccourcissement de la boucle 48 et par un allongement de la boucle 43. Au cours de cette phase D d'évolution de la vitesse Vᵥ en fonction du temps, laquelle phase D se termine lorsque la manivelle 59 revient dans la position décrite en référence à la figure 3, la vitesse Vᵥ croît à nouveau pour passer à la valeur Vₘᵢₙ à la valeur moyenne V₁.

Les phases successives A, B, C, D, de même durée, correspondent à un cycle de rotation de la manivelle 59 autour de l'axe 60, c'est-à-dire à un cycle d'évolution des vitesses Vᵥ, et ce cycle reprend ensuite à l'identique, de façon systématique. La rotation de la manivelle 59 s'effectue en continu, à une vitesse constante telle que la durée tₒ d'un tel cycle corresponde à la cadence déterminée c. On observera que, dans l'exemple illustré, la variation de la vitesse Vᵥ en fonction du temps est sensiblement sinusoïdale, mais on pourrait faire d'autres choix en conservant naturellement le caractère systématique de l'évolution de la vitesse Vᵥ autour de la vitesse V1, conformément à la présente invention.

Du fait de la symétrie mutuelle, pour chaque balancier 50, des axes 47 et 49 par rapport à l'axe 51 d'oscillation, la somme des longueurs respectives des boucles 38 et 43 correspondant à un même balancier 50, c'est-à-dire à une même zone 34, reste en permanence sensiblement constante pendant l'oscillation du balancier 50 si bien que celle-ci n'affecte pas la vitesse de déplacement de la bande transporteuse 4 dans ses zones 20, 21 et 35, c'est-à-dire préserve la vitesse V₁ dans ces zones.

Dans l'exemple qui vient d'être décrit, compte tenu de l'utilisation d'une bielle 54 unique raccordant mutuellement tous les balanciers 50 et articulée sur chacun d'entre eux autour d'un axe 55 situé à la même distance de l'axe 51 de pivotement du balancier 50 par rapport au bâti 2, l'amplitude d'oscillation des différents balanciers 50 est identique, si bien que les vitesses Vₘₐₓ et Vₘᵢₙ sont identiques pour les différentes zones 34.

On pourrait cependant différencier ces valeurs limites Vₘₐₓ et Vₘᵢₙ selon les zones 34, tout en conservant la même cadence d'oscillation des balanciers 50 en prévoyant, comme il est illustré, une possibilité de raccorder les balanciers 50 deux à deux, par des bielles individuelles articulées sur chacun d'entre eux autour d'un axe dont la position par rapport à l'axe 51 respectif pourrait être différente, naturellement en remplacement de la bielle unique 54.

Ainsi, dans l'exemple illustré, chacun des balanciers 50 comporte des dispositions propres à définir non seulement l'axe 55 utilisé dans l'exemple illustré pour l'articulation de la bielle commune 54, mais également des moyens pour définir trois autres axes 65, 66, 67 d'articulation pour une bielle, voire pour deux bielles. Dans l'exemple illustré, ces axes 65, 66, 67, parallèles aux axes 55 et 51, sont coplanaires avec ces derniers et les axes 65 et 66 sont situés entre les axes 51 et 55 alors que l'axe 67 est situé en dessous de l'axe 65 mais il s'agit naturellement d'un exemple non limitatif. Chacun des axes 55, 65, 66, 67 peut être par exemple défini par un trou de réception amovible, au choix, d'un tourillon d'articulation de bielle, d'une façon aisément concevable par un Homme du métier.

Une telle disposition permet d'articuler la bielle 57 sur le balancier 50 le plus proche du moteur 62 autour de l'un quelconque des axes correspondants 55, 65, 66, 67, d'articuler également sur l'un quelconque de ces axes une bielle que l'on articule par ailleurs sur le balancier 50 immédiatement voisin, dans le sens d'un éloignement par rapport au moteur 62, autour de l'un quelconque des axes 55, 65, 66, 67 correspondants ; ce balancier 50 peut être lui-même raccordé au balancier 50 immédiatement voisin, dans le sens d'un éloignement par rapport au moteur 62, par une bielle articulée autour de l'un quelconque des axes 55, 65, 66, 67 de l'un et l'autre de ces balanciers, et il en est de même entre les deux balanciers 50 les plus éloignés du moteur 62, si l'on se réfère à l'exemple illustré dans lequel, comme les zones 34, les balanciers 50 sont au nombre de quatre. Un Homme du métier comprendra aisément que le fait d'articuler une bielle de liaison entre deux balanciers 50 à une même distance de l'axe 51 correspondant donne au mouvement synchronisé de ces deux balanciers la même amplitude, ce qui correspond à une même amplitude de variation de vitesse de la surface transporteuse 6 dans les zones 34 correspondantes ; le fait d'articuler une telle bielle plus près de l'axe 51 sur le balancier 50 le plus proche du moteur 62 que sur le balancier 50 immédiatement suivant dans le sens d'un éloignement par rapport au moteur 62 entraîne une plus faible amplitude d'oscillation de ce dernier balancier 50, c'est-à-dire une plus faible amplitude de variation de la vitesse du tronçon 34 correspondant ; à l'inverse, le fait d'articuler une bielle de liaison entre deux balanciers 50 voisins plus loin de l'axe 51 correspondant dans le cas du balancier 50 le plus proche du moteur 62 que dans le cas du balancier 50 immédiatement suivant dans le sens d'un éloignement par rapport à ce moteur 62 entraîne une plus grande amplitude d'oscillation de ce dernier balancier, c'est-à-dire une plus grande amplitude de variation de vitesse de la surface transporteuse 6 dans la zone 34 correspondante. Naturellement, la longueur des bielles assurant l'accouplement entre deux balanciers 50 voisins doit être le cas échéant adaptée, afin que les balanciers 50 oscillent dans toute la mesure du possible symétriquement autour d'une même orientation moyenne respective qui est celle qui est illustrée aux figures 1 et 3.

On observera dans le cas d'une interruption de l'oscillation des balanciers 50 dans l'une quelconque de leurs orientations, la surface transporteuse 6 se déplace à la même vitesse V₁, dans le sens 19, dans toutes ses zones, c'est-à-dirc aussi bien dans ses zones 34 que dans ses zones 20, 21 et 35, si bien que le dispositif 1 continue à assurer une fonction de transport des produits 23 dans le sens 19, mais sans leur appliquer ni une mise au pas, ni une mise en phase.

Un Homme du métier comprendra aisément que le mode de mise en oeuvre de l'invention qui vient d'être décrit ne constitue qu'un exemple non limitatif, par rapport auquel on pourra prévoir de nombreuses variantes.

Ces variantes peuvent notamment porter sur le mode de réalisation des moyens pour faire varier systématiquement les longueurs des boucles 38, 43 situées respectivement en amont et en aval de chaque zone 34, et on a illustré à la figure 9 une variante selon laquelle chaque balancier 50, monté oscillant autour d'un axe respectif 51 par rapport au bâti 2 de la machine, est remplacé par un curseur 250 animé d'un mouvement de va-et-vient, en translation, par rapport à ce bâti 2 qui n'est pas représenté à la figure 9 mais que l'on retrouve à l'identique.

En effet, le dispositif selon l'invention 201 illustré à la figure 9 est identique à celui qui a été décrit en référence aux figures 1 à 5, en tout point si l'on excepte ce remplacement des palonniers 50 par des curseurs 250 et quelques adaptations qui en découlent.

En particulier, on retrouve à l'identique et dans une disposition relative identique, à la figure 9, les rouleaux 10, 12, 14, 16, 36, 39, 41, 44, montés à la rotation autour d'axes horizontaux, transversaux respectifs 11, 13, 15, 17, 37, 40, 42, 45, contournés à l'identique de ce qui a été décrit en référence aux figures 1 à 5 par une bande transporteuse sans fin 4. Un entraînement du rouleau 17 à la rotation autour de son axe 16, par rapport au bâti non représenté, au moyen d'un moteur 18, permet de déplacer celle-ci de façon courante à une vitesse V₁ de valeur déterminée comme on l'a indiqué précédemment, notamment au niveau de son brin supérieur 5, plan et horizontal, définissant vers le haut une surface transporteuse 6 également plane et horizontale, et plus précisément dans une zone d'extrémité amont 20 et une zone d'extrémité aval 21 de la surface transporteuse 6, en référence à un sens longitudinal 19 allant du rouleau 10 vers le rouleau 12 ainsi que dans chacune des zones 35 joignant, à l'intérieur de la zone 22 longitudinalement intermédiaire entre les zones 20 et 21, un rouleau 44 au rouleau 36 immédiatement consécutif dans le sens 19. Par contre, dans chaque zone 34 située entre un rouleau 39 et le rouleau 41 immédiatement consécutif dans le sens 19, la surface transporteuse 6 se déplace en référence au sens 19 à une vitesse variable Vᵥ, oscillant systématiquement autour de la valeur V₁, entre une valeur maximale qui peut être positive, auquel cas cette surface 34 se déplace en permanence dans le sens 19, ou nulle, auquel cas cette surface 34 s'immobilise périodiquement mais se déplace le reste du temps dans le sens 19, ou encore négative, auquel cas la surface 34 change périodiquement de sens longitudinal de déplacement.

Comme dans le cas du dispositif 1 décrit en référence aux figures 1 à 5, cette variation de la vitesse Vᵥ est obtenue par formation d'une boucle 38, sous la surface transporteuse 6, entre chaque rouleau 36 et le rouleau 39 immédiatement consécutif dans le sens 19, c'est-à-dire en amont de chaque zone 34, et d'une boucle 43, sous la surface transporteuse 6, entre chaque rouleau 41 et le rouleau 44 immédiatement consécutif dans le sens 19, c'est-à-dire immédiatement en aval de chaque zone 34, ainsi que par une variation systématique, oscillatoire, des longueurs respectives des boucles 38 et 43 ainsi associées à une même zone 34 de telle sorte que l'une de ces longueurs croisse quand l'autre décroît, et inversement, tout en gardant une valeur constante à la somme de ces deux longueurs.

A cet effet, dans le cas du dispositif 201, les deux boucles 38 et 43 asociées à une même zone 34 sont rabattues à l'horizontale, dans des sens longitudinaux opposés et plus précisément l'une vers l'autre dans cet exemple, afin de coopérer avec le curseur respectif 250, disposé entre elles.

A cet effet, respectivement sous chacun des rouleaux 36, 39, 41, 44 est monté sur le bâti non représenté du dispositif 201, autour d'un axe horizontal, transversal, respectif 269, 270, 271, 272, un rouleau respectif 273, 274, 275, 276. Chacun de ces rouleaux 273 à 276 est monté à la rotation libre autour de son axe par rapport au bâti du dispositif 201, de même que l'ensemble des rouleaux précédemment décrits à l'exception du rouleau 16 assurant l'entraînement de la bande 4. Les rouleaux 274 et 275 sont mutuellement symétriques par rapport au plan moyen 52 de la zone 34 considérée et il en est de même des rouleaux 269 et 276, lesquels sont disposés plus bas, c'est-à-dire plus loin du brin supérieur 5 de la bande 4, que les rouleaux 274 et 275 tout en étant situés au-dessus du brin inférieur 7 du tapis transporteur 4.

La boucle 38, située en amont de la zone 34 correspondante, pend sous les rouleaux 36 et 39 situés à la transition entre cette zone 34 et la zone de la surface 6 située immédiatement en amont, à savoir la zone 20 ou une zone 35, et descend du rouleau 36 vers le rouleau 273, qu'elle contourne par l'amont et par le bas, puis s'étend à l'horizontale, dans le sens 19, du rouleau 273 à un rouleau 246 identique au rouleau 46 qu'il remplace et monté à la rotation libre autour d'un axe horizontal, transversal 248 sur le curseur 250 associé à la zone 34 considérée, puis contourne ce rouleau 246 par l'aval et, au-dessus de ce rouleau 246, s'étend horizontalement en sens opposé au sens 19 jusqu'au rouleau 274 qu'elle contourne par le bas et par l'amont pour remonter jusqu'au rouleau 39. De même, la boucle 43, suspendue entre le rouleau 41 de la zone 34 considérée et le rouleau 44 de la zone 35 ou 21 immédiatement suivante dans le sens 19, descend du rouleau 41 jusqu'au rouleau 275, qu'elle contourne par l'aval et par le bas, puis s'étend horizontalement en sens opposé au sens 19, du rouleau 275 jusqu'à un rouleau 247, identique au rouleau 47 qu'il remplace et monté à la rotation libre sur le curseur 250 autour d'un axe 249 horizontal et transversal, situé au même niveau horizontal que l'axe 248 dans l'exemple illustré et décalé vers l'aval, en référence au sens 19, par rapport à l'axe 248 ; la bande contourne ensuite le rouleau 247 par l'amont et s'étend ensuite horizontalement, dans le sens 19, du rouleau 247 jusqu'au rouleau 276 qu'elle contourne par le bas et par l'aval avant de remonter vers le rouleau 44.

Dans sa position illustrée à la figure 9, le curseur 250, de même que chacun des curseurs 250 associés respectivement aux autres zones 34, occupe une position moyenne dans laquelle les axes 248 et 249 sont de préférence mutuellement symétriques par rapport au plan 52, dont ils sont plus proches que les axes 270 et 271, eux-mêmes plus proches de ce plan 52 que les axes 269 et 272 ainsi, les longueurs respectives des boucles 38 et 43 sont identiques.

Cependant, à partir de cette position moyenne, le curseur 250 peut accomplir un mouvement de va-et-vient longitudinal schématisé par une double flèche 279, qui le décale alternativement dans un sens et dans l'autre par rapport à sa position moyenne illustrée à la figure 9 et rapproche les axes 248 alternativement des axes 269 et 270 et des axes 271 et 272, toutefois avec une amplitude maximale telle que les distances séparant du plan 52 respectivement les axes 248 et 249 restent à tout moment inférieures à celles qui séparent de ce plan 52 les axes 270 et 271 afin que le rouleau 246 ne franchisse jamais l'aplomb du rouleau 274 et n'atteigne jamais le rouleau 273 en s'éloignant du plan 52 en sens opposé au sens 19 et que le rouleau 247 ne franchisse jamais l'aplomb du rouleau 275 et n'atteigne jamais le rouleau 276 en s'éloignant du plan 52 dans le sens 19 lors de ce mouvement de va-et-vient.

A cet effet, le curseur 250 est guidé au coulissement longitudinal par rapport au bâti du dispositif 201 par des moyens qui ont été simplement schématisés à la figure 9 et sont communs à l'ensemble des curseurs 250 correspondant aux différentes zones 34.

Ces moyens comportent une bielle longitudinale 254 comparable à la bielle 54 si ce n'est qu'elle est liée de façon rigide à chacun des curseurs 250, de telle sorte que chacun d'entre eux occupe simultanément sa position moyenne et que ces derniers se déplacent à l'unisson, avec la même amplitude, dans le mouvement de va-et-vient schématisé par la double flèche 279, et qu'elle est guidée à la translation par rapport au bâti non illustré du dispositif 201 dans des glissières schématisées en 280, d'une façon qui sera aisément compréhensible par un Homme du métier. Par une extrémité, ici son extrémité aval en référence au sens 19, la bielle 254 assurant un accouplement entre les curseurs 250 est articulée, autour d'un axe horizontal, transversal 256, sur une bielle 57 en tout point comparable à la bielle 57 précédemment décrite et raccordée comme elle, autour d'un axe 58 parallèle à l'axe 256, à une manivelle 59 elle-même montée à la rotation autour d'un axe 60 horizontal, transversal, situé dans le plan horizontal 61 passant par l'axe 256 et constituant ici un plan moyen de la bielle 254, la bielle 59 étant susceptible d'être entraînée en rotation autour de cet axe 60, par rapport au bâti du dispositif 201, dans un sens 63 par le moteur 62 que l'on retrouve à l'identique.

Un Homme du métier comprendra aisément qu'une rotation continue de la manivelle 59 autour de l'axe 60, dans le sens 63, à une vitesse convenablement choisie en fonction de la cadence c provoque un mouvement de va-et-vient longitudinal systématique de la bielle 254 et, avec elle, de chaque coulisseau 250, autour de la position moyenne des coulisseaux 250 illustrée à la figure 9, ce qui alterne les phases de décroissance de la longueur de la boucle 38 avec croissance de la longueur de la boucle 43 et de décroissance de la longueur de la boucle 38 avec croissance de la boucle 43 tout en maintenant une valeur sensiblement constante à la somme de ces deux longueurs, dans des conditions en tout point similaires à celles qui ont été décrites en référence aux figures 1 à 6.

Naturellement, au même titre que chacun des rouleaux du dispositif 1, chacun des rouleaux du dispositif 201 pourrait être remplacé par un train respectif de galets coaxiaux, mutuellement juxtaposés transversalement.

En outre, une variante des dispositifs 1 et 201 illustrés respectivement aux figures 1 à 5 et à la figure 9 consiste à remplacer la bande transporteuse 4, d'une pièce sur toute la dimension transversale du dispositif 1 ou 201, par une juxtaposition de courroies individuelles avantageusement guidées par des poulies individuelles groupées en batteries coaxiales remplaçant respectivement les rouleaux 10, 12, 15, 16, 36, 39, 41, 44. Dans un tel cas, les poulies correspondant à deux rouleaux 36, 39 immédiatement voisins peuvent être disposées autour d'un même axe remplaçant les axes 37 et 40, selon une disposition alternée selon cet axe unique, et il peut en être de même des poulies remplaçant les rouleaux 41 et 44, ce qui permet d'assurer à la surface transporteuse 6 une planéité complète, sans discontinuité. Les rouleaux 46 et 47, de même que les rouleaux 246, 247 et 273 à 276, peuvent également être remplacés par des batteries coaxiales respectives de poulies individuelles, naturellement en conservant toutefois la différenciation des axes 48 et 49, dans le cas d'une telle variante du dispositif 1 alors que dans une telle variante du dispositif 201, les axes 248 et 249 peuvent rester dissociés ou se confondre, auquel cas les poulies remplaçant les rouleaux 246 et 247 alternent selon leur axe alors commun et les curseurs 250 vont et viennent autour d'une position moyenne dans laquelle cet axe commun est situé dans le plan moyen 52 de la zone 34 respectivement correspondante.

Une telle variante n'a pas été illustrée mais sa réalisation pratique relève des aptitudes normales d'un homme du métier.

Selon une autre variante, par contre illustrée à la figure 8, on peut également définir la surface transporteuse 6 non plus au moyen d'une bande transporteuse sans fin 4, mais au moyen de rouleaux transporteurs entraînés par une courroie.

La figure 8 illustre cette variante dans le cadre d'un dispositif selon l'invention 101 par ailleurs en tout point identique avec celui qui a été décrit en référence à la figure 1, si bien que l'on y retrouve les mêmes références numériques pour des composants identiques ou des zones correspondantes, à savoir des références numériques 2, 3, 6, 17 à 22, 28 à 30, 34, 35, 48 à 57, 62, 63, 65 à 67.

Dans cette variante, la surface 6 est définie par les génératrices supérieures, coplanaires, de rouleaux mutuellement juxtaposés longitudinalement, c'est-à-dire dans le sens 19, et montés à la rotation autour d'axes horizontaux, transversaux, respectifs par rapport au bâti 2. De ces rouleaux, avantageusement mutuellement identiques, on a simplement représenté un rouleau 110 monté à la rotation autour d'un axe horizontal, transversal 111 par rapport au bâti 2 et constituant le rouleau d'extrémité amont de la zone amont 20 de la surface 6, des rouleaux 136 montés à la rotation autour d'axes horizontaux, transversaux, 137 par rapport au bâti 2 et constituant les extrémités aval respectives de la zone 20 et de chacune des zones 35, des rouleaux 139 montés à la rotation autour d'axes horizontaux, transversaux, 140 par rapport au bâti 2 et définissant les extrémités amont des zones 34, des rouleaux 141 montés à la rotation autour d'axes horizontaux, transversaux 142 par rapport au bâti 2 et définissant des extrémités aval des zones 34, des rouleaux 144 montés à la rotation autour d'axes horizontaux, transversaux 145 par rapport au bâti 2 et définissant les extrémités amont des zones 35 ainsi que l'extrémité amont de la zone 21, et un rouleau 112 monté à la rotation autour d'un axe horizontal, transversal 113 par rapport au bâti 2 et définissant l'extrémité avale de la zone 21. les axes 111, 137, 140, 142, 145, 113 sont disposés comme les axes 11, 37, 40, 42, 45, 13 respectivement si bien que le dispositif 101 conserve les mêmes caractéristiques dimensionnelles et les mêmes possibilités que le dispositif 1.

Chacun des rouleaux définissant ainsi la surface transporteuse 6 est entraîné en rotation, autour de son axe, par une courroie sans fin 104 suivant une trajectoire sensiblement identique à celle de la bande 4 en étant placée en relation d'entraînement avec chacun des rouleaux, par exemple munis à cet effet d'une gorge annulaire de révolution autour de l'axe correspondant et formant poulie. La courroie 104 présente ainsi un brin supérieur 105 longitudinal, longeant la surface transporteuse 6 et placé en relation d'entraînement avec chacun des rouleaux constituant celle-ci, du rouleau 110 qu'elle contourne par l'amont au rouleau 112 qu'elle contourne par l'aval, en présentant une zone correspondant respectivement à chacune des zones 20, 21 et 22 et, à l'intérieur de celle-ci, à chacune des zones 34 et 35. La courroie 104 présente également un brin de liaison 109 auquel le brin supérieur 105 se raccorde par son contournement du rouleau 112 et qui raccorde le brin supérieur 105 à un brin inférieur 107 également horizontal, en contournant par l'aval et par le dessous une poulie 114 montée à la rotation autour d'un axe 115, parallèle à l'axe 113, sur le bâti 2 de la machine ; cet axe 115 occupe une position identique à celle de l'axe 15. Le brin inférieur 107 raccorde lui-même le brin de liaison 109, vers l'amont, à un brin 108 de liaison avec le brin supérieur 105, se raccordant à ce dernier en contournant le rouleau 110 par l'arrière et le dessus. Le raccordement entre le brin inférieur 107 et le brin de liaison 108 s'effectue par contournement, par le bas et par l'amont, d'une poulie 116 présentant comme axe l'axe 17 du moteur commandé d'entraînement 18 de façon à pouvoir être entraînée en rotation par celui-ci, à une vitesse constante et de préférence réglable, se traduisant par un entraînement de chacun des rouleaux définissant la surface transporteuse 6 à la rotation autour de son axe de telle sorte que les génératrices supérieures de ces rouleaux, c'est-à-dire la surface 6, se déplacent à une vitesse déterminée V₁ dans le sens 19 dans les zones 20, 21 et 35. Cette vitesse V1 est définie comme précédemment en fonction de la cadence moyenne, déterminée, c de dépôt des produits de chaque file sur la surface transporteuse 6 dans la zone 20 et du pas longitudinal p qu'il y a lieu d'établir entre ces produits.

A la jonction entre la zone 20 et la zone 22, à la jonction entre la zone 22 et la zone 21 et à la jonction de chacune des zones 34 avec une zone 35, respectivement, la courroie 104 forme en dessous de la surface de transport 106 une boucle 138, 143 à raison d'une boucle 138 entre chaque rouleau 136 et le rouleau 139 immédiatement voisin et d'une boucle 143 entre chaque rouleau 141 et le rouleau 144 immédiatement voisin.

Sous chaque zone 34, les boucles 138 et 143 disposées respectivement de part et d'autre de celle-ci contournent par le bas respectivement l'axe 48 et l'axe 49 du balancier 50 associé à cette zone 34, par l'intermédiaire d'une poulie respective 146, 147 montée à la rotation libre autour de cet axe 48 ou 49, respectivement, par rapport au balancier 50. Les deux poulies 146 et 147 sont identiques et disposées identiquement aux rouleaux 46 et 47 sur le balancier 50.

Un Homme du métier comprendra aisément que par un mouvement d'oscillation des balanciers 50 identique à celui qui a été décrit en référence aux figures 1 à 5, entraînant une variation oscillatoire systématique des longueurs respectives des boucles 138 et 143, à l'identique de ce qui a été décrit à propos des boucles 38 et 43, on puisse obtenir que, dans chacune des zones 34, la surface transporteuse 6 se déplace à une vitesse Vᵥ variant cycliquement autour de la vitesse V₁ entre une valeur maximale Vₘₐₓ et une valeur minimale Vₘᵢₙ, à une cadence correspondant à la cadence moyenne déterminée c de dépôt de produits, dans chaque file, sur la zone 20 de la surface transporteuse 6, tout en conservant pour chacune des zones 35 une vitesse de déplacement de la surface de transport 6 dans le sens 19 égale à la vitesse V₁ de déplacement de celle-ci dans les zones 20 et 21.

Naturellement, chacun des balanciers 50 pourrait être remplacé par un curseur coopérant avec les deux boucles 138 et 143 correspondantes, convenablement déviées, et mobile en va-et-vient longitudinal comme on l'a décrit en référence à la figure 9.

Un Homme du métier comprendra également aisément qu'au lieu de traiter simultanément trois files longitudinales de produits, un dispositif selon l'invention tel qu'il vient d'être décrit pourrait traiter un nombre différent de files, à savoir une seule file en assurant simplement une mise au pas entre les produits, ou bien deux ou plus de trois files en assurant non seulement la mise au pas des produits, ou le cas échéant leur maintien au pas, mais également une mise en phase des produits des différentes files pour former des rangées transversales 27 respectant entre elles le pas p.

On peut également associer plusieurs exemplaires d'un dispositif selon l'invention afin de traiter simultanément plusieurs files de produits en mettant les produits au pas dans chaque file, ou en les laissant au pas s'ils y sont déjà, et en établissant un déphasage déterminé des produits entre une file et la ou chaque file voisine, ou encore entre des groupes voisins de files voisines.

On a illustré à la figure 7 une telle variante de réalisation d'un dispositif selon l'invention, appliquée au traitement simultané de trois files de produits, étant entendu qu'une adaptation à un nombre différent, au moins égal à deux, de files de produits relève des aptitudes normales d'un Homme du métier. Il est rappelé que, de façon générale, on entend par "produit" non seulement un objet individuel, mais également un groupe, organisé ou non, d'objets.

Bien que cela ne ressorte pas intégralement de la figure 7, le dispositif 301 selon cette variante reprend la structure générale du dispositif décrit en référence aux figures 1 à en ce qui concerne la disposition des axes 11, 13, 37, 40, 42, 45, la définition dans la surface transporteuse 6 d'une zone amont 20 dans laquelle des dispositifs d'alimentation 28, 29, 30 qui sont espacés longitudinalement, deux à deux, du pas p déposent chacun à une cadence moyenne déterminée c, par une extrémité respective 31, 32, 33, des produits 23 suivant une file longitudinale respective 24, 25, 26, en respectant approximativement le pas p, et la définition dans la surface transporteuse 6 d'une zone aval 21 dans laquelle les produits 23 sont ordonnés de façon à présenter aussi rigoureusement que possible le pas p dans chaque file, toutefois en étant dans ce cas décalés du tiers du pas p, dans le sens 19, en ce qui concerne les produits de la file 25 par rapport à ceux de la file 24 et ceux de la file 26 par rapport à la file 25, étant entendu que cet exemple n'est en aucune façon limitatif.

Toutefois, dans cet exemple, la bande sans fin 4 est subdivisée transversalement en trois bandes 4a, 4b, 4c également sans fin, qui sont mutuellement juxtaposées transversalement et dont chacune définit, par un brin supérieur respectif 5a, 5b, 5c, une partie de la surface transporteuse 6 correspondant respectivement à la file 24, à la file 25 et à la file 26.

Les trois bandes 4a, 4b, 4c sont identiques et se déplacent à l'unisson au niveau de leur brin inférieur, comparable au brin inférieur 7 subdivisé transversalement, ainsi qu'au niveau des brins de liaison entre ce brin inférieur et leur brin supérieur, lesquels brins de liaison sont comparables respectivement aux brins de liaison 8 et 9 subdivisés transversalement, de même que dans les zones 20 et 21 au niveau de leurs brins supérieurs 5a, 5b, 5c. Plus précisément, dans ces zones 20 et 21, les trois brins 5a, 5b, 5c se déplacent à l'unisson, dans le sens 19, à une même vitesse V1 qui leur est communiquée par le moteur 18, non représenté mais que l'on retrouve à l'identique et qui coopère avec chacune des bandes transporteuses 4a, 4b, 4c au moyen d'un même rouleau, à savoir le rouleau 16 d'axe 17 précédemment décrit et non illustré à la figure 7. De même, autour des axes 11, 37, 44, 13 et au niveau de l'axe 15 non représenté, les bandes transporteuses 4a, 4b, 4c peuvent être guidées par un même rouleau correspondant respectivement au rouleau 10, au rouleau 36, au rouleau 44, au rouleau 12 et au rouleau 14, étant entendu que l'on pourrait également prévoir des rouleaux dissociés, bien que coaxiaux, pour chacune des bandes 4a, 4b, 4c au niveau de chacun de ces axes.

Par contre, autour des axes 40 et 42, chacune des bandes 4a, 4b, 4c contourne un rouleau certes comparable aux rouleaux 39 et 41, respectivement, mais distinct d'une bande à l'autre et pouvant tourner autour de son axe, par rapport au bâti 2, indépendamment des deux autres rouleaux qui lui sont coaxiaux et correspondent aux autres bandes. On définit ainsi dans chaque brin supérieur Sa, 5b, 5c, dans la zone intermédiaire 22, une alternance longitudinale de zones 34a, 34b, 34c de la surface de transport 6, mutuellement juxtaposées transversalement et pouvant se déplacer longitudinalement indépendamment l'une de l'autre, entre deux axes 40 et 42 consécutifs, et de zones 35a, 35b, 35c également mutuellement juxtaposées transversalement et dans lesquelles la surface de transport 6 se déplace à la même vitesse et dans le même sens, à savoir en pratique à la vitesse V₁ et dans le sens 19 comme dans les zones 20 et 21.

Comme les zones 34, les zones 34a, 34b, 34c sont dans l'exemple illustré au nombre de quatre et les zones 35a, 35b, 35c sont dans cet exemple au nombre de trois, dont chacune est intercalée longitudinalement entre deux zones 34a, 34b, 34c, mais on pourrait choisir des nombres différents de ces zones sans sortir pour autant du cadre de la présente invention.

Sous chacune des zones 34a, 34b, 34c est disposé un balancier respectif en tout point identique à un balancier 50 et portant comme celui-ci, dans une disposition identique à celle qui a été décrite à propos des rouleaux 46 et 47, des rouleaux en tout point identiques à ces derniers si ce n'est qu'ils ne correspondent transversalement qu'à l'une, respective, des bandes 4a, 4b, 4c dont chacune forme sous la surface transporteuse 6, respectivement immédiatement en amont de chaque zone 34a, 34b, 34c et immédiatement en aval de celle-ci, une boucle en tout point identique aux boucles 38 et 43, respectivement, si ce n'est qu'elle ne s'étend transversalement que sur la dimension transversale de la bande transporteuse respectivement considérée 4a, 4b, 4c. Chaque balancier coopère avec les deux boucles correspondant à la même zone 34a, 34b, 34c, respectivement, d'une façon identique à la façon dont un balancier 50 coopère avec les deux boucles 38, 43 associées.

Les balanciers correspondant à toutes les zones 34a peuvent être raccordés entre eux par tout système de bielles analogue à ceux qui ont été décrits en référence aux figures 1 à 5, de même que tous les balanciers correspondant aux zones 34b et que tous les balanciers correspondant aux zones 34c, respectivement, de telle sorte que tous les balanciers correspondant aux zones 34a oscillent à l'unisson comme on l'a décrit en référence à la figure 1, de même que tous les balanciers correspondant respectivement aux zones 34b et aux zones 34c.

Cette oscillation respective des différents groupes de balanciers s'effectue à la même cadence qui est la cadence moyenne déterminée c de dépôt de produits 23 dans chaque file 24, 25, 26 mais, pour établir le décalage longitudinal ou déphasage souhaité entre les produits des différentes files, on établit un déphasage correspondant dans les oscillations respectives de ces différents groupes de balanciers.

On peut utiliser à cet effet un moteur unique tel que le moteur 62, commun aux trois groupes de balanciers, en entraînant en rotation autour de l'axe 60 de celui-ci trois manivelles analogues à la manivelle 59, en associant chacune de ces manivelles à un groupe respectif de palonniers d'une façon identique à l'une ou l'autre des façons d'associer la manivelle 59 aux balanciers 50 dans l'exemple de mise en oeuvre de l'invention décrit en référence aux figures 1 à 5, en faisant tourner les manivelles 59 à l'unisson, en continu, en respectant la cadence déterminée c, mais en prévoyant que les trois manivelles 59 soient décalées de 120° l'une par rapport à l'autre autour de l'axe 60, s'il s'agit, comme il est illustré, d'établir un décalage d'un tiers de pas entre deux files voisines.

Ainsi, si la manivelle correspondant aux palonniers associés aux zones 34c est en avance de 120° par rapport à celle qui correspond aux zones 34b, elle-même en avance de 120° par rapport à celle qui correspond aux palonniers associés aux zones 34a, en référence au sens 63, les produits 23 déposés en trois files 24, 25, 26, en respectant en moyenne la cadence déterminée c et le pas déterminé p se présentent dans la zone 21 selon la configuration illustrée, dans laquelle chaque produit 23 de la file 26 est en avance d'un tiers de pas p sur un produit 23 de la file 25, lui-même en avance d'un tiers de pas p par rapport à un produit de la file 24, en référence au sens 19, les produits étant mutuellement espacés du pas p dans chaque file.

Il s'agit cependant d'un exemple non limitatif à partir duquel un Homme du métier pourra prévoir de nombreuses variantes non seulement quant au nombre de bandes transporteuses 4a, 4b, 4c mutuellement juxtaposées transversalement et quant au nombre de zones successives se déplaçant respectivement à la vitesse déterminée V₁ et à la vitesse Vᵥ oscillant autour de cette vitesse V₁ dans chacune de ces bandes mutuellement juxtaposées transversalement, mais également en ce qui concerne le décalage de pas entre les produits transportés au moyen de chacune de ces bandes, c'est-à-dire le déphasage entre les oscillations des balanciers respectivement associés.

Un Homme du métier comprendra aisément que l'on puisse substituer aux balanciers associés respectivement à chacune des bandes mutuellement juxtaposées longitudinalement des curseurs accomplissant un mouvement systématique de va-et-vient, en décalage de phase de l'une à l'autre de ces bandes, chaque ensemble de curseurs associés à une même bande transporteuse étant en tout point comparable à l'ensemble de curseurs décrits en référence à la figure 9.

Un Homme du métier comprendra également aisément que bien que cette variante de mise en oeuvre de l'invention ait été décrite en référence à une définition de la surface transporteuse 6 par des bandes sans fin, elle pourrait également s'appliquer lorsque la surface transporteuse 6 est définie par des courroies individuelles mutuellement juxtaposées transversalement, contournant des batteries coaxiales de poulies, ou par des rouleaux, comme on l'a décrit en référence à la figure 8 à titre de variante du mode de réalisation des figures 1 à 5 ; chacune des bandes transporteuses mutuellement juxtaposées transversalement serait alors constituée par un groupe respectif de rouleaux en tout point comparable aux groupes de rouleaux décrit en référence à la figure 8, entraîné par une courroie respective en tout point comparable à la courroie 104, et les courroies correspondant aux différents groupes de rouleaux subiraient les mêmes déviations que celle-ci, ainsi que les mêmes variations localisées de longueur de boucles, au moyen de balanciers ou de curseurs, mais avec un déphasage approprié d'un groupe à l'autre.

Enfin, un Homme du métier comprendra aisément que, quel que soit son mode de réalisation, un dispositif selon l'invention peut être associé à d'autres dispositifs transporteurs connus antérieurement, de même qu'à tout dispositif d'alimentation de la zone 20 et de regroupement ou de reprise des produits dans la zone 21.

## Revendications

1. Procédé pour transporter dans un sens longitudinal déterminé (19), en respectant un pas longitudinal déterminé (p), des produits (23) arrivant au moins en moyenne à une cadence déterminée (c), ledit procédé consistant notamment à faire reposer les produits (23) sur des premières surfaces transporteuses (20, 21, 35) se succédant dans ledit sens (19) et se déplaçant dans ledit sens (19) à une vitesse déterminée (V₁) égale au produit de ladite cadence (c) par ledit pas (p),
caractérisé en ce que, entre deux desdites premières surfaces transporteuses (20, 21, 35), on fait reposer les produits (23) sur une deuxième surface transporteuse (34) que l'on fait se déplacer dans ledit sens (19) à une vitesse (Vᵥ) que l'on fait osciller systématiquement, autour de ladite vitesse déterminée (V₁₎, à une cadence égale à ladite cadence déterminée (c).

2. Procédé selon la revendication 1, caractérisé en ce que l'on fait alterner longitudinalement plusieurs deuxièmes surfaces transporteuses (34) avec des premières surfaces transporteuses (20, 21, 35), en ce que, de façon courante, la somme des dimensions longitudinales d'une première et d'une deuxième surfaces transporteuses (34, 35) consécutives est égale au pas (p) ou à un multiple de celui-ci, et en ce que l'on fait osciller en synchronisme la vitesse (Vᵥ) des deuxièmes surfaces transporteuses (34).

3. Procédé selon l'une quelconque des revendications 1 et 2, caractérisé en ce qu'on le met en oeuvre simultanément sur plusieurs files longitudinales (24, 25, 26), mutuellement juxtaposées transversalement, de produits (23) en utilisant des premières et deuxièmes surfaces transporteuses (20, 21, 34, 35) communes auxdites files (24, 25, 26) et en déposant les produits (23) sur la première surface transporteuse (20) la plus en amont, en référence audit sens (19), au moins en moyenne à ladite cadence (c), respectivement dans chaque file (24, 25, 26).

4. Procédé selon l'une quelconque des revendications 1 à 3, caractérisé en ce qu'on le met en oeuvre simultanément sur plusieurs files longitudinales (24, 25, 26), mutuellement juxtaposées transversalement, de produits (23) en utilisant des alternances longitudinales, spécifiques auxdites files (24, 25, 26) et mutuellement juxtaposées transversalement, de premières et deuxièmes surfaces transporteuses (20, 21, 34a, 34b, 34c, 35a, 35, 35c), en introduisant entre lesdites alternances un déphasage déterminé dans l'oscillation des vitesses (Vᵥ) de déplacement des deuxièmes surfaces respectives (34a, 34b, 34c) et en déposant les produits (23) sur chaque première surface (20) la plus en amont, en référence audit sens (19), au moins en moyenne à ladite cadence (c).

5. Dispositif pour transporter dans un sens longitudinal déterminé (19), en respectant un pas longitudinal déterminé (p), des produits (23) arrivant au moins en moyenne à une cadence déterminée (c), ledit dispositif comportant notamment des premières surfaces transporteuses (20, 21, 35) se succédant dans ledit sens (19), des moyens (4, 4a, 4b, 4c, 18, 104) pour déplacer les premières surfaces transporteuses (20, 21, 35) dans ledit sens à une vitesse déterminée (V₁) égale au produit de ladite cadence (c) par ledit pas (p) et des moyens (28, 29, 30) pour déposer les produits (23) au moins en moyenne à la cadence déterminée (c) sur la première surface transporteuse (20) la plus en amont, en référence audit sens (19),
caractérisé en ce qu'il comporte, entre deux desdites premières surfaces transporteuses (20, 21, 35), une deuxième surface transporteuse (34) et en ce que sont prévus des moyens (18, 50, 62, 250) pour déplacer la deuxième surface transporteuse (34) dans ledit sens à une vitesse (Vᵥ) oscillant systématiquement, autour de ladite vitesse déterminée (V₁), à une cadence égale à ladite cadence déterminée (c).

6. Dispositif selon la revendication 5, caractérisé en ce qu'il comporte plusieurs deuxièmes surfaces transporteuses (34), alternant longitudinalement avec des premières surfaces transporteuses (20, 21, 35), en ce que, de façon courante, la somme des dimensions longitudinales d'une première et d'une deuxième surfaces transporteuses (34, 35) consécutives est égale au pas (p) ou à un multiple de celui-ci, et en ce que les moyens (18, 50, 62, 250) pour déplacer les deuxièmes surfaces transporteuses sont synchronisés en oscillation de leur vitesse (Vᵥ).

7. Dispositif selon la revendication 6, caractérisé en ce que les moyens (18, 50, 62, 250) pour déplacer les deuxièmes surfaces transporteuses (34) comportent des moyens moteurs (18, 62) communs à celles-ci.

8. Dispositif selon l'une quelconque des revendications 5 à 7, caractérisé en ce que les moyens (18, 50, 62, 250) pour déplacer les premières et deuxièmes surfaces transporteuses comportent des moyens moteurs communs d'entraînement (18).

9. Dispositif selon l'une quelconque des revendications 5 à 8, caractérisé en ce qu'il comporte une bande transporteuse sans fin (4, 4a, 4b, 4c), des moyens (36, 39, 41, 44) pour dévier ladite bande sans fin (4, 4a, 4b, 4c) pour y différencier des premières et deuxième(s) zones constituant respectivement les premières et deuxième(s) surfaces transporteuses (20, 21, 34, 34a, 34b, 34c, 35, 35a, 35b, 35c), en formant une boucle (38, 43) sous la bande (4, 4A, 4B, 4C) à la transition entre la ou chaque deuxième surface transporteuse (34, 34a, 34b, 34c) et les premières surfaces (20, 21, 35, 35a, 35b, 35c) immédiatement précédente et suivante, respectivement, dans ledit sens (19), des moyens (18) d'entraînement de la bande (4, 4a, 4b, 4c) à ladite vitesse déterminée (V₁) de façon courante, notamment dans ses zones constituant les premières surfaces transporteuses (20, 21, 35, 35a, 35b, 35c), et des moyens (50, 62, 250) pour faire varier systématiquement les longueurs des boucles (38, 43) situées respectivement en amont et en aval de la ou chaque zone constituant une deuxième surface transporteuse (34, 34a, 34b, 34c), en référence audit sens (19), de telle sorte que l'une croisse quand l'autre décroît, selon un mode oscillatoire, à une cadence égale à ladite cadence déterminée (c), en gardant une valeur sensiblement constante à la somme desdites longueurs et que la bande (4, 4A, 4b, 4c) se déplace à ladite vitesse (Vᵥ) dans sa ou chaque zone constituant une deuxième surface transporteuse (34, 34a,34b, 34c).

10. Dispositif selon l'une quelconque des revendications 5 à 8, caractérisé en ce qu'il comporte une succession longitudinale de rouleaux transversaux (110, 112, 135, 139, 141, 144), montés rotatifs autour d'un axe transversal respectif (111, 113, 137, 140, 142, 145), une courroie sans fin (104) en relation d'entraînement avec chaque rouleau (110, 112, 136, 139, 141, 144), des moyens (136, 139, 141, 144) pour dévier ladite courroie sans fin (104) pour y différencier des zones correspondant à des jeux de rouleaux constituant respectivement les première et deuxième surfaces transporteuses (20, 27, 34, 35), en formant une boucle (138, 143) sous les rouleaux (136, 139, 141, 144) à la transition entre les jeux constituant respectivement la ou chaque deuxième surface transporteuse (34) et les premières surfaces (20, 21, 35) immédiatement précédente et suivante, respectivement, dans ledit sens (19), des moyens (18) d'entraînement de la courroie (104) à une vitesse correspondant pour les rouleaux (110, 112, 136, 139, 141, 144) à ladite vitesse déterminée (V₁) de façon courante, notamment dans ses zones correspondant aux jeux de rouleaux (110, 112, 136, 144) constituant les premières surfaces transporteuses (20, 21, 35), et des moyens (50, 62) pour faire varier systématiquement les longueurs des boucles (138, 143) situées respectivement en amont et en aval de la ou chaque zone correspondant à un jeu de rouleaux (139, 141) constituant une deuxième surface transporteuse (34), en référence audit sens (19), de telle sorte que l'une croisse quand l'autre décroît, selon un mode oscillatoire, à une cadence égale à ladite cadence déterminée (c), en gardant une valeur sensiblement constante à la somme desdites longueurs,et que la courroie (104) se déplace à une vitesse correspondant pour les rouleaux à ladite vitesse (Vᵥ) dans sa ou chaque zone correspondant à un jeu de rouleaux (110, 112, 136, 144) constituant une deuxième surface transporteuse (20,21, 35).

11. Dispositif selon l'une quelconque des revendications 9 et 10, caractérisé en ce que les boucles (38, 43, 138, 143) sont orientées sensiblement transversalement, en ce que les moyens (50, 62, 250) pour faire varier systématiquement les longueurs des boucles (38, 43, 138, 143) comportent un balancier (50) disposé sous la ou chaque deuxième zone (34), respectivement, et monté oscillant autour d'un axe (51) situé entre les boucles (38, 43, 138, 143), dans un plan transversal (52) de symétrie de la deuxième zone (34), ledit balancier (50) comportant des moyens (46, 47, 146, 147) de contournement respectivement par l'une et l'autre boucles (38, 43, 138, 143), mutuellement symétriques par rapport à cet axe (51), et des moyens (62) pour faire osciller le balancier (50) systématiquement, à une cadence égale à ladite cadence déterminée (c), autour d'une position moyenne dans laquelle les boucles (38, 43, 138, 143) ont la même longueur.

12. Dispositif selon l'une quelconque des revendications 9 et 10, caractérisé en ce que les boucles (38, 43) sont orientées sensiblement longitudinalement, dans des sens mutuellement opposés, en ce que les moyens (50, 62, 250) pour faire varier systématiquement les longueurs des boucles (38, 43) comportent un curseur (250) disposé sous la ou chaque deuxième zone (34), respectivement, et monté à la translation longitudinale entre les boucles (38, 43), ledit curseur (250) comportant des moyens (246, 247) de contournement respectivement par l'une et l'autre boucles (38, 43), et des moyens (62) pour faire aller et venir le curseur (250) systématiquement à une cadence égale à ladite cadence déterminé (c), autour d'une position moyenne.

13. Dispositif selon l'une quelconque des revendications 11 et 12, caractérisé en ce que le ou chaque balancier (50) ou curseur (250), respectivement, est relié à un moteur (62) d'entraînement par un système bielle-manivelle (57, 59).

14. Dispositif selon l'une quelconque des revendications 5 à 13, caractérisé en ce qu'il comporte des moyens (28, 29, 30) pour déposer des produits (23) en plusieurs files (24, 25, 26) sur la première surface transporteuse (20) la plus en amont, en référence audit sens (19), au moins en moyenne à ladite cadence (c), respectivement dans chaque file (24, 25, 26).

15. Dispositif selon l'une quelconque des revendications 5 à 13, caractérisé en ce qu'il est prévu en plusieurs exemplaires mutuellement juxtaposés transversalement, et en ce que sont prévus des moyens pour introduire un déphasage déterminé dans l'oscillation des vitesses (Vᵥ) de déplacement des deuxièmes surfaces respectives (34a, 34b, 34c) desdits exemplaires et des moyens (28, 29, 30) pour déposer des produits respectivement sur chaque première surface transporteuse (20), la plus en amont en référence audit sens (19), au moins en moyenne à ladite cadence (c).
